(19) Europäisches Patentamt / European Patent Office / Office européen des brevets

(11) **EP 4 480 998 A1**

(12) **EUROPEAN PATENT APPLICATION**
published in accordance with Art. 153(4) EPC

(43) Date of publication:
**25.12.2024 Bulletin 2024/52**

(21) Application number: 23752775.9

(22) Date of filing: **02.02.2023**

(51) International Patent Classification (IPC):
*C08J 9/16* (2006.01)     *B29C 44/00* (2006.01)
*B29C 44/44* (2006.01)

(52) Cooperative Patent Classification (CPC):
**B29C 44/00; B29C 44/44; C08J 9/16**

(86) International application number:
**PCT/JP2023/003416**

(87) International publication number:
**WO 2023/153310 (17.08.2023 Gazette 2023/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.02.2022  JP 2022020488**
**14.02.2022  JP 2022020489**

(71) Applicant: **JSP Corporation**
**Tokyo 100-0005 (JP)**

(72) Inventors:
• **SAKAMURA Takumi**
**Kanuma-shi, Tochigi 322-0014 (JP)**
• **OHTA Hajime**
**Kanuma-shi, Tochigi 322-0014 (JP)**

(74) Representative: **Kramer Barske Schmidtchen Patentanwälte PartG mbB**
**European Patent Attorneys**
**Landsberger Strasse 300**
**80687 München (DE)**

(54) **EXPANDED CRYSTALLINE-THERMOPLASTIC-RESIN PARTICLES, MOLDED OBJECT FROM EXPANDED CRYSTALLINE-THERMOPLASTIC-RESIN PARTICLES, AND PRODUCTION METHOD THEREFOR**

(57)     A molded article of expanded beads is obtained by mutual fusion-bonding of columnar crystalline thermoplastic resin expanded beads (1) each having no through-hole. The molded article ratio of the molded article of crystalline thermoplastic resin expanded beads is 15 times or more and 90 times or less. The molded article of crystalline thermoplastic resin expanded beads has a closed cell content of 90% or more. The molded article of crystalline thermoplastic resin expanded beads has an open cell content of 2% or more and 12% or less.

FIG. 1

**Description**

TECHNICAL FIELD

The present invention relates to a crystalline thermoplastic resin expanded bead, a molded article of crystalline thermoplastic resin expanded beads, and a method for producing the same.

BACKGROUND ART

A molded article of polypropylene-based resin expanded beads is lightweight and excellent in cushioning property, rigidity, and the like, and thus is used for various applications. The molded article of polypropylene-based resin expanded beads is produced, for example, by a method called an in-mold molding method in which polypropylene-based resin expanded beads are filled in a mold, and then steam is supplied into the mold to heat the expanded beads. In the in-mold molding method, when steam is supplied into the mold, the expanded beads are secondarily expanded and the surfaces thereof are fused. As a result, the expanded beads in the mold are mutually fusion-bonded, and a molded article having a shape corresponding to the shape of the cavity of the mold can be obtained. Since the molded article immediately after molding tends to swell due to secondary expanding, the molded article is cooled with water, air, or the like in the mold and then released from the mold.

In the molded article of expanded beads stored at normal temperature after released from the mold in the course of producing the molded article as described above, the steam introduced into cells of the molded article of expanded beads during in-mold molding is condensed in the cells, which causes negative pressure inside the cells. As a result, volume shrinkage occurs in the molded article of expanded beads, so that the molded article may be greatly deformed. Accordingly, after releasing the molded article of expanded beads from the mold, an aging step of allowing the molded article of expanded beads to stand for a predetermined time under a high-temperature atmosphere adjusted to a temperature of, for example, about 60°C to 80°C to recover the shape of the molded article of expanded beads is performed.

However, because the aging step in the in-mold molding of the polypropylene-based resin expanded beads requires investment in equipment, and takes time and labor, there is a demand for omitting the aging step to improve the productivity of the molded article of expanded beads to a large degree. Therefore, for example, Patent Literature 1 discloses a technique of fusion-bonding expanded beads including a foamed layer and a fusion-bondable layer while maintaining voids between the beads. In addition, Patent Literature 2 discloses a technique for in-mold molding of expanded beads using a polypropylene-based resin in which a melting point, a melt flow index, a Z-average molecular weight, and the like are adjusted to specific ranges.

PRIOR ART LITERATURE

Patent Literature

Patent Literature 1: JP-A-2003-39565
Patent Literature 2: JP-A-2000-129028

SUMMARY OF INVENTION

PROBLEMS TO BE SOLVED BY INVENTION

However, in the technique described in Patent Literature 1, although the aging step can be omitted, a large number of voids are formed between the expanded beads of the molded article. Thus, the appearance of the molded article of expanded beads is significantly poor, and the rigidity is insufficient for some uses. In the technique described in Patent Literature 2, although the aging step can be shortened, the aging step is still required, therefore, when the aging step is omitted, the molded article of expanded beads is significantly shrunk and deformed, and it is difficult to obtain a molded article of expanded beads having a desired shape.

The present invention has been made in view of such a background, and is directed to providing a crystalline thermoplastic resin expanded bead capable of obtaining a molded article of expanded beads having a desired shape and being excellent in appearance and rigidity even when an aging step is omitted, a molded article of crystalline thermoplastic resin expanded beads including the expanded beads, and a method for producing the same.

MEANS FOR SOLVING PROBLEM

One aspect of the present invention is a molded article of crystalline thermoplastic resin expanded beads according to the following [1] to [3].

[1] A molded article of crystalline thermoplastic resin expanded beads formed by mutual fusion-bonding of crystalline thermoplastic resin expanded beads each having a columnar shape without a through-hole, the molded article having a molded article ratio of 15 times or more and 90 times or less, wherein

a closed cell content of the molded article is 90% or more, and
an open cell content of the molded article is 2% or more and 12% or less.

[2] The molded article of crystalline thermoplastic resin expanded beads according to [1], wherein the open cell content of the molded article is 7.5% or less.

[3] The molded article of crystalline thermoplastic resin expanded beads according to [1] or [2], wherein a number of the expanded beads per unit area in a surface of the molded article is 3 beads/cm$^2$ or more and 30 beads/cm$^2$ or less. Another aspect of the present invention is a crystalline thermoplastic resin expanded bead according to the following [4] to [10].

[4] A crystalline thermoplastic resin expanded bead for in-mold molding, including a foamed layer including a crystalline thermoplastic resin as a base resin, and having a bulk ratio of 15 times or more and 90 times or less, wherein

the expanded bead has a columnar shape without a through-hole and has at least one groove on a side peripheral surface thereof,
in a cut surface obtained by cutting the expanded bead at a center in an axial direction of the expanded bead along a plane perpendicular to the axial direction, a ratio Ca/A of an average cross-sectional area Ca per groove to an average cross-sectional area A of the expanded bead is 0.01 or more and 0.25 or less, a ratio Ct/A of a total cross-sectional area Ct of the groove(s) to the average cross-sectional area A of the expanded bead is 0.02 or more and 0.75 or less, and an average outer diameter D of the expanded bead is 0.5 mm or more and 10 mm or less, and
a ratio L/D of an average length L of the expanded bead in the axial direction to the average outer diameter D of the expanded bead is 0.5 or more and 2.0 or less.

[5] The crystalline thermoplastic resin expanded bead according to [4],

wherein the expanded bead has a closed cell content of 90% or more, and
wherein in the cut surface obtained by cutting the expanded bead at the center in the axial direction along the plane perpendicular to the axial direction, the ratio Ca/A of the average cross-sectional area Ca per groove to the average cross-sectional area A of the expanded bead is 0.01 or more and 0.20 or less, the ratio Ct/A of the total cross-sectional area Ct of the groove(s) to the average cross-sectional area A of the expanded bead is 0.02 or more and 0.20 or less, and
wherein the ratio L/D of the average length L of the expanded bead in the axial direction to the average outer diameter D of the expanded bead is 0.5 or more and 1.5 or less.

[6] The crystalline thermoplastic resin expanded bead according to [4] or [5], wherein the average cross-sectional area Ca per groove in the cut surface of the expanded bead is 0.05 mm$^2$ or more and 1.2 mm$^2$ or less.

[7] The crystalline thermoplastic resin expanded bead according to any one of [4] to [6], wherein a ratio H/D of an average depth H per groove to the average outer diameter D of the expanded bead in the cut surface of the expanded bead is 0.20 or less.

[8] The crystalline thermoplastic resin expanded bead according to any one of [4] to [7], wherein a ratio A/B of an average cross-sectional area A of the foamed layer to an area B of a virtual perfect circle having the average outer diameter D of the expanded bead as a diameter is 0.55 or more and 0.90 or less.

[9] The crystalline thermoplastic resin expanded bead according to any one of [4] to [8], wherein the ratio L/D of the average length L of the expanded bead in the axial direction to the average outer diameter D of the expanded bead is more than 0.7 and less than 1.3.

[10] The crystalline thermoplastic resin expanded bead according to any one of [4] to [9], wherein the number of the grooves provided on the expanded bead is 2 or more and 6 or less.

Still another aspect of the present invention is a method for producing a molded article of crystalline thermoplastic resin expanded beads according to the following [11] or [12].

[11] A method for producing a molded article of crystalline thermoplastic resin expanded beads, the method including:

filling crystalline thermoplastic resin expanded beads in a mold; and
thereafter, performing in-mold molding by supplying steam into the mold to fusion-bond the expanded beads, thereby obtaining a molded article of crystalline thermoplastic resin expanded beads, the molded article having a molded article ratio of 15 times or more and 90 times or less and an open cell content of 2% or more and 12% or less, wherein
the expanded beads each include a foamed layer including a crystalline thermoplastic resin as a base resin,
the expanded beads each have a columnar shape without a through-hole and have at least one groove on a side peripheral surface thereof,
in a cut surface obtained by cutting each of the expanded beads at a center in an axial direction of the expanded bead along a plane perpendicular to the axial direction, a ratio $C_a/A$ of an average cross-sectional area $C_a$ per groove to an average cross-sectional area $A$ of the expanded bead is 0.01 or more and 0.25 or less, a ratio $C_t/A$ of a total cross-sectional area $C_t$ of the groove(s) to the average cross-sectional area $A$ of the expanded bead is 0.02 or more and 0.75 or less, and an average outer diameter $D$ of the expanded bead is 0.5 mm or more and 10 mm or less, and
a ratio $L/D$ of an average length $L$ of the expanded bead in the axial direction to the average outer diameter $D$ of the expanded bead is 0.5 or more and 2.0 or less.

[12] The method for producing a molded article of crystalline thermoplastic resin expanded beads according to [11], wherein the expanded beads are filled in the mold without applying an internal pressure to the expanded beads or after applying an internal pressure of 0.1 MPa(G) or less to the expanded beads.

EFFECTS OF INVENTION

According to the above aspects, even when the aging step is omitted, it is possible to provide a molded article of crystalline thermoplastic resin expanded beads (hereinafter, referred to as "molded article of expanded beads" or "molded article") that has a desired shape and is excellent in appearance and rigidity, and a method for producing the same.

BRIEF DESCRIPTION OF DRAWINGS

Fig. 1 is a perspective view of a columnar expanded bead having a cross-shaped cross section.
Fig. 2 is a cross-sectional view taken along line II-II in Fig. 1 (a plan view of a cut surface of the expanded bead).
Fig. 3 is a perspective view of a cylindrical expanded bead.
Fig. 4 is a cross-sectional view taken along line IV-IV in Fig. 3 (a plan view of a cut surface of the expanded bead).
Fig. 5 is a perspective view of a triangular prism-shaped expanded bead.
Fig. 6 is a cross-sectional view taken along line VI-VI in Fig. 5 (a plan view of a cut surface of the expanded bead).
Fig. 7 is a perspective view of a quadrangular prism-shaped expanded bead.
Fig. 8 is a cross-sectional view taken along line VIII-VIII in Fig. 7 (a plan view of a cut surface of the expanded bead).
Fig. 9 is an explanatory diagram illustrating a method of calculating an area of a high-temperature peak.
Fig. 10 is a perspective view of an expanded bead in Example 101.
Fig. 11 is a cross-sectional view taken along line XI-XI in Fig. 10 (a plan view of a cut surface of the expanded bead).

MODE FOR CARRYING OUT INVENTION

(Molded article of expanded beads)

The molded article of expanded beads is obtained by in-mold molding columnar crystalline thermoplastic resin expanded beads (hereinafter, referred to as "expanded beads") each having no through-hole. By in-mold molding of expanded beads each having no through-hole, a molded article having excellent surface properties can be obtained, and the value of the open cell content of the molded article can be easily adjusted to the specific range.

The molded article has an open cell structure. The open cell structure is a minute space portion communicating with the outside of the molded article. The open cell structure is formed by complicatedly connecting voids formed by voids between the expanded beads communicating with each other, open cell portions of the expanded beads constituting the molded article, and the like. In addition, when the molded article is prepared with expanded beads each having a groove(s) on a side peripheral surface of the expanded beads as described below, voids formed by allowing grooves of a plurality of the expanded beads to communicate with each other, and voids formed by allowing grooves of the expanded beads to communicate with voids formed between the expanded beads, and the like may also become an open cell structure.

The open cell content of the molded article is 2% or more and 12% or less. By setting the open cell content of the molded article within the above-described specific range, even when the aging step is omitted, significant shrinkage, deformation, and the like of the molded article can be curtailed, and the appearance and rigidity of the molded article can be improved. This is considered to be because the molded article has the open cell structure at the specific ratio described above, and air quickly flows into cells in the molded article after demolding to thereby increase the internal pressure of the entire molded article, so that the dimensions of the molded article is likely to be stabilize early.

In a case where the open cell content of the molded article is too low, the molded article produced without the aging step may significantly shrink and become deformed, so that a molded article having a desired shape may not be obtained. From the viewpoint that significant shrinkage, deformation, and the like of the molded article can be further curtailed even when the aging step is omitted, the open cell content of the molded article is set to 2% or more. From the same viewpoint, the open cell content of the molded article is preferably 2.5% or more, more preferably 3% or more, and even more preferably 4% or more. On the other hand, in the case where the open cell content of the molded article is too high, the appearance of the molded article may deteriorate and the rigidity of the molded article may decrease. In addition, the water leakage preventing property of the molded article may be insufficient depending on the application. From the viewpoint that the appearance, rigidity, and water leakage preventing property of the molded article can be further improved, the open cell content of the molded article is set to 12% or less. From the same viewpoint, the open cell content of the molded article is preferably 10% or less, more preferably 7.5% or less, even more preferably 7% or less, particularly preferably 6.5% or less, and most preferably 6% or less.

For the purpose of configuring a preferable range of the open cell content of the molded article, the upper limit and the lower limit of the open cell content of the molded article described above can be arbitrarily combined. For example, the open cell content of the molded article may be 2% or more and 10% or less, 2% or more and 7.5% or less, 2.5% or more and 7% or less, 3% or more and 6.5% or less, or 4% or more and 6% or less.

The open cell content of the molded article is measured in accordance with ASTM-D6226-10, and in the measurement, the influence of closed cells broken at the cutting out of a measurement sample is corrected according to Procedure 2 described in Supplement X1.3 of the same standard. Specifically, first, the molded article is conditioned by allowing the molded article to stand at a temperature of 23°C for 12 hours. Then, a cubic first test piece of 2.5 cm long × 2.5 cm wide × 2.5 cm high is cut out from the central portion of the molded article, and its geometric volume Va (unit: cm$^3$), that is, a product of a vertical dimension (unit: cm), a horizontal dimension (unit: cm), and a height dimension (unit: cm) is calculated. Next, a true volume V1 (unit: cm$^3$) of the first test piece is measured using a dry automatic densitometer (specifically, AccuPic II1340 manufactured by Shimadzu Corporation). At this time, the pressure applied in a purging step and a testing step is set to 5 kPa. In addition, in procedures 9.13 and 9.14, the pressure is recorded after waiting until the rate of change in pressure becomes 0.100 kPa/min or less.

Thereafter, the first test piece is divided into 8 equal parts to prepare cubic second test pieces each having a size of 1.25 cm long × 1.25 cm wide × 1.25 cm high. Then, a true volume (unit: cm$^3$) of each of the second test pieces is measured by the same method as the method for measuring the true volume V1 of the first test piece. Thereafter, the true volumes of the individual second test pieces are summed to obtain a true volume V2 of the second test pieces. Using the geometric volume Va of the first test piece, the true volume V1 of the first test piece, and the true volume V2 (unit: cm$^3$) of the second test pieces, which are thus obtained, the open cell content (unit: %) of the first test piece is calculated based on the following formula (1). The open cell content measured in this manner is a value obtained by correcting the influence of closed cells broken at cutting out the second test pieces from the first test piece, and is also referred to as a corrected open cell content.

$$\text{Open cell content} = (\text{Va-2V1+V2}) \times 100/\text{Va} \cdots (1)$$

The above operation is performed on five first test pieces, and the open cell content of each first test piece is calculated. An arithmetic average value of the open cell contents of the five first test pieces is defined as an open cell content Co of the molded article.

The open cell content Co in the present specification is a physical property value that is measured in accordance with ASTM-D6226-10, with the influence of cutting out the sample being corrected according to Procedure 2 described in Supplement X1.3, as described above, and is a physical property value that cannot be calculated based on the closed cell content of the molded article measured in accordance with ASTM-D6226-10. That is, the open cell content Co of the molded article measured by the above-described method has a relationship represented by the following formula (2) with a closed cell content Bp of the molded article measured in accordance with ASTM-D6226-10.

$$Co \neq 100\text{-}Bp \cdots (2)$$

In the open cell content Co measured by the above method, the influence of closed cells broken at cutting out the test piece is corrected. In contrast, in the closed cell content Bp of the molded article measured in accordance with the method described in ASTM-D6226-10, the influence of closed cells broken at cutting out the test piece is not corrected. Thus, the open cell content Co of the molded article is a physical property value having a concept different from that of the closed cell content Bp. The proportion of closed cells broken at cutting out the test piece is greatly affected by the shapes (that is, the presence or absence of a groove, the cross-sectional area of the groove, and the like) of the expanded beads constituting the molded article of expanded beads and the closed cell content of the expanded beads. Furthermore, the proportion of closed cells broken at cutting out the test piece is also affected by molding conditions (that is, the molding pressure, the internal pressure of the expanded beads, the filling method, and the like) of the molded article of expanded beads, and the like. Thus, it is also difficult to estimate the value of the open cell content Co based on the value of the closed cell content of the molded article measured in accordance with ASTM-D6226-10. The closed cell content of the molded article measured in accordance with ASTM-D2856-70 Procedure C is technically equivalent to the closed cell content Bp of the molded article measured in accordance with ASTM-D6226-10. Thus, it is also difficult to estimate the value of the open cell content Co based on the value of the closed cell content of the molded article measured in accordance with ASTM-D2856-70 Procedure C.

In addition, the open cell content Co in the present description is a physical property value having a concept different from that of a voidage of the molded article. The voidage of the molded article is measured and calculated, for example, as follows. Specifically, first, a test piece having a rectangular parallelepiped shape (for example, 20 mm long × 100 mm wide × 20 mm high) is cut out from the central portion of the molded article. Then, the test piece is immersed in ethanol contained in a measuring cylinder, and a true volume Vc (unit: L) of the test piece is determined from the increase in the liquid level of ethanol. In addition, an apparent volume Vd (unit: L) is determined from the outer dimension of the test piece. The voidage (unit: %) of the molded article is represented by the following formula (3) using the true volume Vc and the apparent volume Vd of the test piece obtained as described above.

$$Voidage = [(Vd\text{-}Vc)/Vd] \times 100 \cdots (3)$$

As described above, also in the measurement of the voidage of the molded article, closed cells broken at cutting out the test piece are not considered. In addition, the method for measuring the voidage is different from the method for measuring the open cell content Co in that a liquid such as ethanol is used as a medium for measurement. Thus, it is also difficult to estimate the value of the open cell content Co based on the value of the voidage of the molded article. It is noted that the voidage of the molded article is always larger than the open cell content Co.

The closed cell content of the molded article is 90% or more. By setting the closed cell content of the molded article to 90% or more, the appearance and rigidity of the molded article can be improved. From the viewpoint of further improving the appearance and rigidity of the molded article, the closed cell content of the molded article is preferably 91% or more, and more preferably 92% or more.

The closed cell content of the molded article is measured in accordance with ASTM-D6226-10. Specifically, first, a test body of 25 mm long × 25 mm wide × 25 mm high is cut out from the central portion of the molded article, and a geometric volume Va (unit: cm³) of the test body, that is, a product of a vertical dimension (unit: cm), a horizontal dimension (unit: cm), and a height dimension (unit: cm) is calculated. Next, according to the procedure described in ASTM-D6226-10, a value of true volume Vx of the test body is measured by an air comparison pycnometer (specifically, AccuPic II1340 manufactured by Shimadzu Corporation). At this time, the pressure applied in a purging step and a testing step is set to 5 kPa. In addition, in procedures 9.13 and 9.14, the pressure is recorded after waiting until the rate of change in pressure becomes 0.100 kPa/min or less. The true volume value Vx obtained by the air comparison pycnometer is the sum (unit: cm³) of the volume of the resin constituting the measurement sample and the total volume of cells of the closed cell portions in the measurement sample.

The closed cell content (unit: %) of the test body is represented by the following formula (4) using a mass W (unit: g) of the test body, a density ρ (unit: g/cm³) of the resin constituting the expanded beads, and the geometric volume Va of the test body and the true volume Vx of the test body obtained by the above-described method.

$$Closed\ cell\ content = (Vx\text{-}W/\rho) \times 100/(Va\text{-}W/\rho) \cdots (4)$$

The above operation is performed on five test bodies, and the closed cell content of each test body is calculated. An arithmetic average value of the closed cell contents of the five test bodies is defined as a closed cell content of the molded article.

From the viewpoint that dimensional change can be sufficiently curtailed even when the aging step is omitted, the voidage of the molded article is preferably 4% or more, more preferably 4.5% or more, and even more preferably 5% or more. On the other hand, from the viewpoint of further improving the rigidity and appearance, the voidage of the molded article is preferably 12% or less, more preferably 10% or less, and even more preferably 8% or less. The voidage of the molded article can be measured by the above-described measurement method.

In configuring a preferable range of the voidage of the molded article, the upper limit and the lower limit of the voidage of the molded article described above can be arbitrarily combined. For example, the voidage of the molded article may be 4% or more and 12% or less, 4.5% or more and 10% or less, or 5% or more and 8% or less.

A molded article ratio of the molded article is set to be 15 times or more and 90 times or less. The molded article having a molded article ratio in the specific range is lightweight and has excellent rigidity. Also, by setting the open cell content and the closed cell content to the above specific ranges, shrinkage and deformation of the molded article can be curtailed even when the aging step is omitted at a molded article ratio within the range of 15 times or more and 90 times or less. When the molded article ratio is too low, it is difficult to obtain a lightweight molded article. From the viewpoint of easily avoiding such a problem, the molded article ratio is preferably 20 times or more, more preferably 25 times or more, and even more preferably 30 times or more.

On the other hand, when the molded article ratio is too high, the rigidity of the molded article may be lowered. From the viewpoint of more easily avoiding such a problem, the molded article ratio is preferably 75 times or less, and more preferably 55 times or less. It is noted that, in a case where the molded article ratio is too low, the rigidity of the molded article becomes increased, thus it is not necessary to perform the aging step for the purpose of recovering dimensional change accompanying shrinkage or deformation of the molded article after in-mold molding.

In configuring a preferable range of the molded article ratio, the upper limit and the lower limit of the molded article ratio described above can be arbitrarily combined. For example, the molded article ratio may be 10 times or more and 90 times or less, 25 times or more and 75 times or less, or 25 times or more and 55 times or less.

The molded article ratio is a value obtained by dividing the density (unit: kg/m$^3$) of a crystalline thermoplastic resin constituting the molded article by the molded article density (unit: kg/m$^3$). The density of the molded article is calculated by dividing the mass (unit: g) of the molded article by the volume (unit: L) obtained from the outer dimension of the molded article and performing unit conversion. It is noted that in the case where the volume of the molded article cannot be easily determined from its external dimensions from the reason, for example, that the molded article has an at least partially complex shape, the volume can be determined by a submersion method.

The molded article density is preferably 10 kg/m$^3$ or more and 60 kg/m$^3$ or less. In this case, the lightweight property and rigidity of the molded article can be improved in a well-balanced manner. From the viewpoint of further improving the rigidity of the molded article, the molded article density is more preferably 15 kg/m$^3$ or more, and even more preferably 20 kg/m$^3$ or more. From the viewpoint of further improving the lightweight property of the molded article, the molded article density is more preferably 50 kg/m$^3$ or less, and even more preferably 45 kg/m$^3$ or less.

Conventionally, in a case of producing a molded article having a low density (that is, a molded article having a high molded article ratio), the molded article tends to be remarkably deformed after demolding, and thus it is particularly difficult to omit the aging step. In contrast, in the molded article of expanded beads, it is possible to omit the aging step even when the density is low, and the molded article has a desired shape and is excellent in appearance and rigidity even without aging. From the viewpoint of effectively exhibiting this effect, the molded article density is preferably set to the above range.

In configuring a preferable range of the molded article density, the upper limit and the lower limit of the molded article density described above can be arbitrarily combined. For example, the molded article density may be 15 kg/m$^3$ or more and 50 kg/m$^3$ or less, or may be 20 kg/m$^3$ or more and 45 kg/m$^3$ or less.

The number of the expanded beads per unit area in the surface of the molded article is preferably 2 beads/cm$^2$ or more and 50 beads/cm$^2$ or less, more preferably 3 beads/cm$^2$ or more and 30 beads/cm$^2$ or less, and even more preferably 4 beads/cm$^2$ or more and 20 beads/cm$^2$ or less. In this case, it is possible to more reliably achieve the effect of curtailing shrinkage and deformation of the molded article even when the aging step is omitted at a molded article ratio within the range of 15 times or more and 90 times or less.

The number of expanded beads per unit area on the surface of the molded article can be measured by the following method. First, five or more square evaluation regions each having a side of 100 mm are set in a portion of the surface of the molded article excluding an end portion. Then, the number of expanded beads present in each evaluation region is counted. At this time, it is assumed that expanded beads present on a boundary line of an evaluation region are also present in the evaluation region. The number of expanded beads per unit area (that is, 1 cm$^2$) in each evaluation region is calculated by dividing the number of expanded beads in an evaluation region thus obtained by the area of the evaluation region. Then, the number of expanded beads per unit area on the surface of the molded article can be calculated by arithmetically averaging the numbers of expanded beads per unit area (that is, 1 cm$^2$) obtained in the plurality of evaluation regions.

The 50% compressive stress $\sigma_{50}$ of the molded article is preferably 180 kPa or more, more preferably 185 kPa or more, even more preferably 200 kPa or more, and particularly preferably 220 kPa or more. In this case, the rigidity of the molded article can be further enhanced. The 50% compressive stress $\sigma_{50}$ of the molded article can be determined according to JIS K6767:1999.

Furthermore, a ratio of the 50% compressive stress $\sigma_{50}$ to the density of the molded article is preferably 6.5 kPa/(kg/m$^3$) or more, more preferably 7.0 kPa/(kg/m$^3$) or more, and even more preferably 7.5 kPa/(kg/m$^3$) or more. In this case, it is possible to further enhance the rigidity per unit mass of the molded article, and to further improve the balance between the lightweight property and the rigidity of the molded article.

The molded article is also used as, for example, a sound absorbing material, an impact absorbing material, a cushioning material, and the like in various fields such as a vehicle field such as an automobile and an architecture field.

(Method for producing molded article of expanded beads)

In preparing the molded article of expanded beads, it is sufficient to perform in-mold molding with steam being supplied into the mold after the mold has been filled with crystalline thermoplastic resin expanded beads, for example. Specifically, first, expanded beads are filled in a mold having a cavity that corresponds to the shape of the desired molded article.

The expanded beads to be filled in the mold each have a foamed layer containing a crystalline thermoplastic resin as a base resin, have a columnar shape without a through-hole, and have at least one groove on a side peripheral surface thereof. In addition, in a cut surface obtained by cutting each of the expanded beads at the center in the axial direction along the plane perpendicular to the axial direction, a ratio Ca/A of an average cross-sectional area Ca per groove to an average cross-sectional area A of the expanded bead is 0.01 or more and 0.25 or less, a ratio Ct/A of a total cross-sectional area Ct of the groove(s) to the average cross-sectional area A of the expanded bead is 0.02 or more and 0.75 or less. An average outer diameter D of the expanded bead is 0.5 mm or more and 10 mm or less. A ratio L/D of an average length L of the expanded bead in the axial direction to the average outer diameter D of the expanded bead is 0.5 or more and 2.0 or less. A more detailed configuration of the expanded bead will be described below.

After such expanded beads are filled in a mold, steam is supplied into the mold to heat the expanded beads. The expanded beads in the mold are heated by steam, and are fusion-bonded to each other while being secondarily expanded. In this way, the expanded beads in the mold can be integrated to form a molded article.

After the heating of the expanded beads has been completed, the molded article in the mold is cooled to stabilize the shape. Thereafter, the molded article is taken out from the mold to complete the in-mold molding. In the production method, an aging step of allowing the molded article after demolding to stand for a predetermined time in a high-temperature atmosphere adjusted to a temperature of, for example, about 60°C to 80°C may be performed as necessary. However, even when the aging step in a high-temperature atmosphere is not performed on the molded article after demolding, shrinkage and deformation of the molded article can be curtailed. In the case where the aging step is omitted, the shape of the molded article can be stabilized, for example, by allowing the molded article after demolding to stand in an environment of, for example, 23°C for 12 hours.

In the production method, the open cell content of the molded article can be adjusted to fall within the range of 2% or more and 12% or less, preferably 2% or more and 10% or less, and more preferably 2% or more and 7.5% or less, for example, by the following method.

First, expanded beads each having the specific shape mentioned above are used as the expanded beads. The expanded beads to be used in the production method each have a columnar shape with no through-hole. Because each expanded bead has no through-hole therein, the expanded beads easily expand outward due to secondary expansion during in-mold molding, and secondary expandability is high. Thus, by providing no through-hole in each of the expanded beads, the open cell content of the molded article can be easily adjusted within the above range. In addition, each expanded bead has a groove(s) on the side peripheral surface thereof. If the expanded beads each have no groove, it is difficult to set the value of the open cell content of the molded article to 2% or more. A specific aspect of the groove provided in each expanded bead will be described below.

The open cell content of the molded article tends to increase as the ratio Ca/A of the average cross-sectional area Ca per groove to the average cross-sectional area A of the expanded bead and the ratio Ct/A of the total cross-sectional area Ct of the groove(s) to the average cross-sectional area A of the expanded bead in the expanded beads are higher. Thus, In the case where the ratio Ca/A and/or the ratio Ct/A is too low, the open cell content tends to be low, and in the case where the ratio Ca/A and/or the ratio Ct/A is too high, the open cell content tends to be high.

The open cell content of the molded article tends to increase as the ratio L/D of the average length L of the expanded bead in the axial direction to the average outer diameter D of the expanded bead increases. Thus, also in the case where the ratio L/D is too high, the open cell content tends to be high.

Furthermore, because the number of open cells contained in the expanded beads themselves increases in the case where the closed cell content of the expanded beads is low, the open cell content of the molded article tends to be high. Accordingly, for example, by performing in-mold molding with expanded beads having a closed cell content of 90% or more, an excessive increase in the open cell content of the molded article can be easily avoided.

In addition to the in-mold molding using such specific expanded beads, the open cell content of the molded article can be more easily adjusted within the specific range, for example, by controlling the conditions in the in-mold molding as follows.

When an internal pressure is applied to the expanded beads before being filled in the mold, secondary expansion easily occurs during molding, and thus the open cell content tends to decrease. In addition, when the internal pressure of the expanded beads is increased, the expanded beads are more easily expanded during molding, and thus the open cell content tends to decrease. From the viewpoint of more easily avoiding the open cell content from becoming too small and more stably producing a molded article having an open cell content of 2% or more, and from the viewpoint of the production efficiency of the molded article, the internal pressure of the expanded beads to be filled in the mold is preferably 0.1 MPa (G) (G: gauge pressure) or less, more preferably 0.05 MPa (G) or less, even more preferably 0.03 MPa (G) or less, and 0 MPa (G), that is, it is particularly preferable to mold the expanded beads without applying an internal pressure to the expanded beads. The pressure (internal pressure) in a cell can be measured by, for example, the method described in JP 2003-201361 A.

In addition, the filling performed in such a manner that the expanded beads in the mold are in a compressed state at the time of completion of the filling makes it easier to fill the gaps between the expanded beads. For example, when the filling rate of the expanded beads filled in the mold at the time of completion of filling is increased, the open cell content tends to decrease, and when the filling rate is decreased, the open cell content tends to increase. Thus, the open cell content can be adjusted to fall within a desired range by adjusting the filling rate of the expanded beads.

As a method of compressing the expanded beads, for example, a cracking filling method can be adopted. The cracking filling method is a method of providing an opening portion in a mold, which is for not completely closing the mold, in order to efficiently fill the expanded beads in an amount exceeding the volume in the mold when filling the expanded beads into the mold. This opening portion is referred to as a cracking, and the ratio (unit: %) of the volume of the opening portion to the volume in the mold is referred to as a cracking amount. It is noted that at the time when the steam is introduced into the mold after the mold has been filled with the expanded beads, the cracking has been finally closed to thereby mechanically compress the expanded beads filled therein. In the case where the expanded beads are filled in the mold by the cracking filling method, the cracking amount is usually preferably within a range of 5% or more and 35% or less, more preferably within a range of 8% or more and 30% or less, and even more preferably within a range of 10% or more and 25% or less.

Instead of the cracking filling method described above, a method such as a compression filling method (for example, the method described in JP H04-46217 A) in which expanded beads in a state of being compressed in advance with a pressurized gas or the like are filled in a mold can also be adopted.

In particular, when in-mold molding is performed on expanded beads in which a relatively large groove(s) is/are formed, such as expanded beads in which the ratio Ca/A of the average cross-sectional area Ca per groove to the average cross-sectional area A of the expanded bead is more than 0.20 and 0.25 or less, or expanded beads in which the ratio Ct/A of the total cross-sectional area Ct of the groove(s) to the average cross-sectional area A of the expanded bead is more than 0.20 and 0.75 or less, an open cell structure is easily formed in the molded article. In this case, by setting the filling rate of the expanded beads filled in the mold to, for example, 30% or more, preferably 40% or more, an open cell structure can be prevented from being excessively formed in the molded article, and a molded article excellent in appearance and rigidity can be obtained accordingly. In this case, the expanded beads are preferably filled into the mold by the compression filling method.

The filling rate (unit: %) of the expanded beads is represented by the following formula (5) using the mass a (unit: kg) of the expanded beads filled in the mold, the bulk density b (unit: $kg/m^3$) of the expanded beads, and the internal volume c (unit: $m^3$) of the mold.

$$\text{Filling rate} = [\{a/(b \times c)\} - 1] \times 100 \cdots (5)$$

When molding temperature (specifically, the molding pressure) during in-mold molding is increased, the open cell content tends to decrease, and when the molding temperature (specifically, the molding pressure) is decreased, the open cell content tends to increase. However, from the viewpoint of the production efficiency of the molded article, it is preferable to perform molding at a low molding pressure. From such a viewpoint, the molding pressure is, for example, preferably in a range of 0.18 MPa (G) or higher and 0.30 MPa (G) or lower, and more preferably in a range of 0.22 MPa (G) or higher and 0.28 MPa (G) or lower in the gauge pressure.

It is noted that the above-described production conditions are each exemplified as one example. By molding the expanded beads in such a manner that the open cell content of a finally obtained molded article falls within the above-described specific range, a molded article having a desired shape and being excellent in appearance and rigidity can be produced without an aging step.

The molded article obtained by the production method is less likely to shrink or deform even when the aging step is not performed. As a reason for obtaining this effect, for example, the following reasons can be considered. The expanded beads each have a groove(s) extending along the axial direction thereof, and thus it is considered that when steam is supplied into the mold, the steam can pass through the grooves. Accordingly, it is considered that steam easily reaches the inside of the mold, and the entire expanded beads in the mold can be easily heated. This makes it possible to obtain a molded article that has excellent fusion-bondability and good appearance even under conditions where the molding heating temperature during in-mold molding is low.

Further, as a result of the steam easily reaching the inside of the mold, the heat received by the expanded beads from the steam during the in-mold molding can be controlled to a low level. In addition, an excessive increase in the internal temperature of the molded article after demolding is avoided. As a result of these, it is considered that the dimension of the molded article after in-mold molding is easily stabilized early.

As described above, the molded article after in-mold molding has an open cell structure including open cells, that is, a minute space portion communicating with the outside of the molded article. Thus, it is considered that when the molded article is taken out from the mold after in-mold molding, the air quickly flows into the cells in the molded article through the open cells, and as a result, the internal pressure of the molded article is stabilized early. As a result of these, it is considered that the production method can prevent significant shrinkage and deformation of the molded article even when the aging step is not performed.

(Crystalline thermoplastic resin expanded bead)

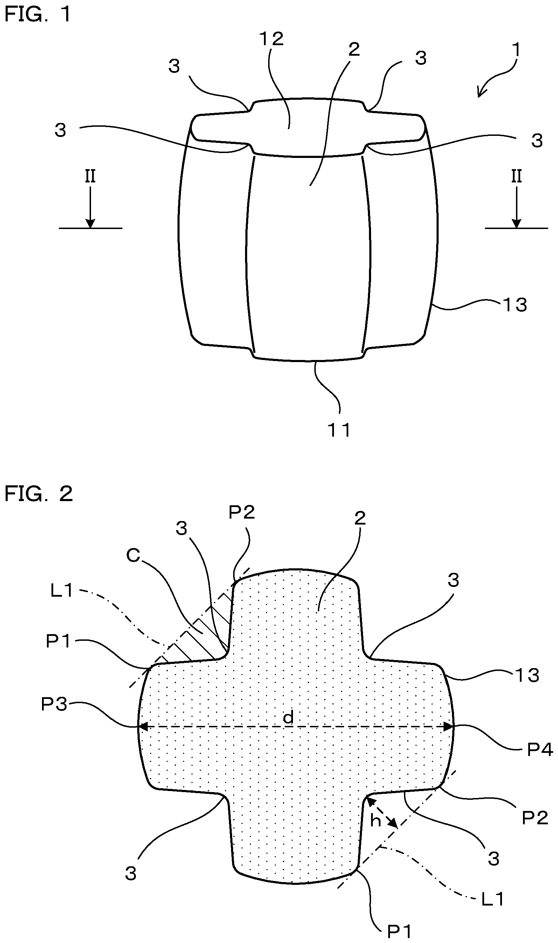

The expanded bead to be used in the production method has a columnar shape having no through-hole. For example, as illustrated in Fig. 1, an expanded bead 1 has a bottom surface 11, a top surface 12 disposed above the bottom surface 11 and having substantially the same shape as the bottom surface 11, and a side peripheral surface 13 connecting an end edge of the bottom surface 11 and an end edge of the top surface 12. In the expanded bead 1 having such a columnar shape, cross-sectional shapes obtained by cutting the expanded bead 1 at various positions on a line segment (that is, the central axis of the expanded bead 1) connecting the center of the bottom surface 11 and the center of the top surface 12 along a plane perpendicular to the line segment are substantially the same.

In addition, the expanded bead preferably has at least one groove on the side peripheral surface thereof. The "groove" described above is a term referring to a recess provided on the side peripheral surface of the expanded bead and extending along the axial direction of the expanded bead. More specifically, in the case where the expanded bead 1 is cut along a plane perpendicular to the axial direction of the expanded bead 1 as illustrated in Fig. 2, a groove 3 of the expanded bead 1 is observed as a portion where the contour of the expanded bead in the cross section is recessed inward.

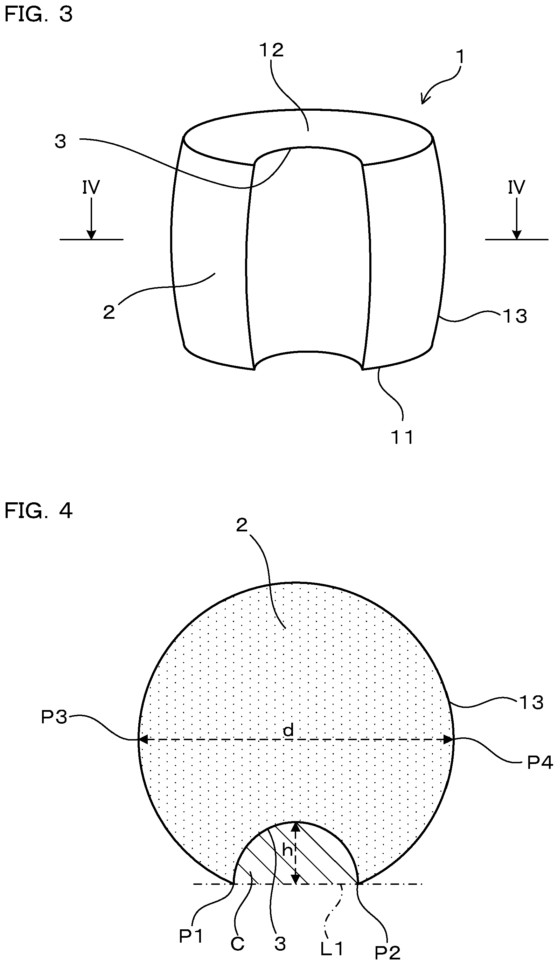

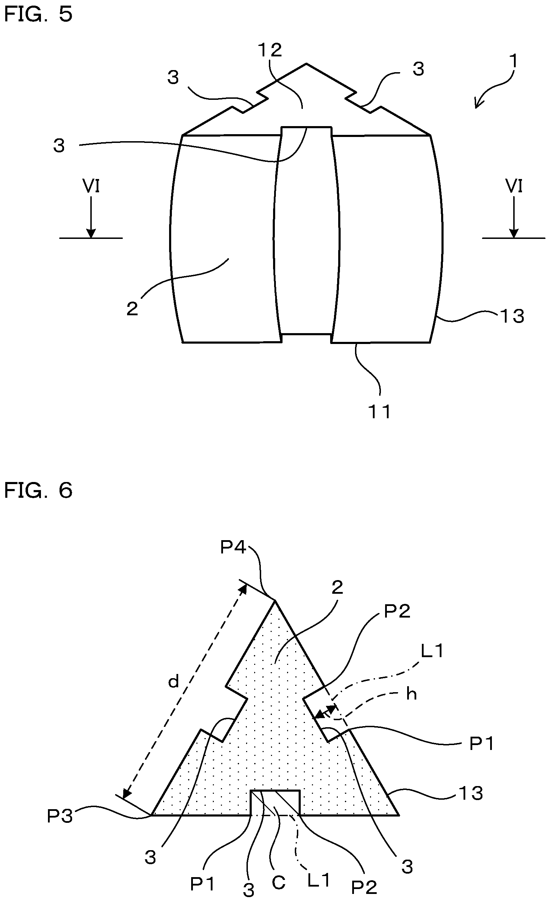

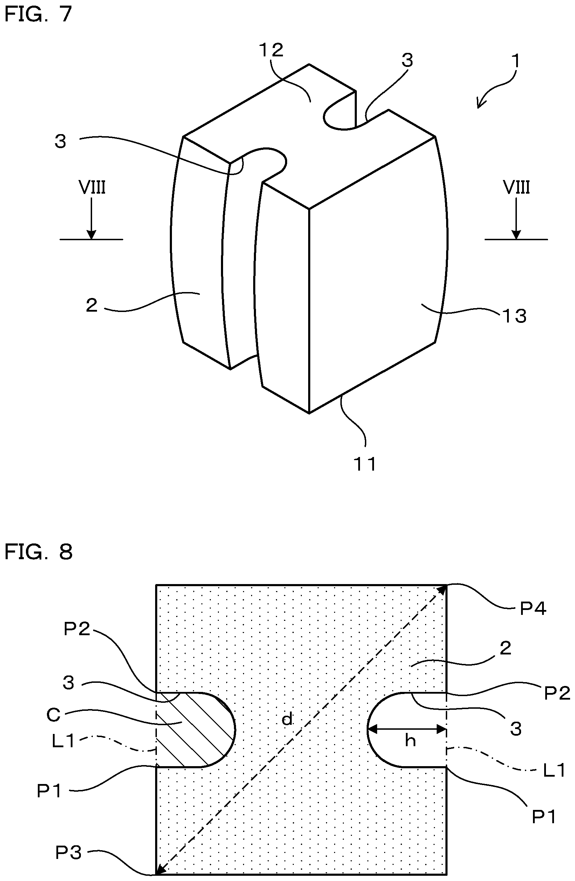

The expanded bead 1 may have various shapes as long as it has a columnar shape having no through-hole. For example, as illustrated in Figs. 1 and 2, the expanded bead 1 may have a columnar shape in which a cross section perpendicular to the axial direction is cross-shaped. The expanded bead 1 having such a shape has four grooves 3 on the side peripheral surface 13 thereof. The cross-sectional shape of the expanded bead 1 in the cross section perpendicular to the axial direction is not limited to the shape in Figs. 1 and 2, and can take various forms such as a shape based on a circle as illustrated in Figs. 3 and 4, a shape based on a triangle as illustrated in Figs. 5 and 6, and a shape based on a quadrangle as illustrated in Figs. 7 and 8.

The number of the grooves 3 provided in the expanded bead 1 may be one as illustrated in Figs. 3 and 4, or may be two or more as illustrated in Figs. 1, 2, and 5 to 8. In addition, the cross-sectional shape of the groove 3 in the cross section perpendicular to the axial direction of the expanded bead 1 is not limited to the V-shape illustrated in Figs. 1 and 2, and may take various forms such as a semicircular shape (see Figs. 3 and 4), a quadrangular shape (see Figs. 5 and 6), and a U-shape (see Figs. 7 and 8). When the expanded bead 1 has two or more grooves 3, all the grooves 3 may have the same cross-sectional shape, or may have cross-sectional shapes different from each other.

The expanded bead preferably has two or more and six or fewer grooves. In this case, an open cell structure to be described below is more easily formed in the molded article. Thus, even when the aging step is omitted, the molded article is less likely to be deformed.

In the case where the expanded bead has two or more grooves, these grooves are preferably arranged at equal intervals on the side peripheral surface of the expanded bead. In other words, when the expanded bead has a plurality of grooves, these grooves are preferably arranged at symmetrical positions with respect to the central axis of the expanded bead. When such an expanded bead is subjected to in-mold molding, the open cell structure is easily formed more uniformly in the molded article. Thus, even if the aging step is omitted, shrinkage and deformation of the molded article can be more reliably curtailed.

The ratio Ca/A of the average cross-sectional area Ca per groove to the average cross-sectional area A of the expanded bead is 0.01 or more and 0.25 or less, the ratio Ct/A of the total cross-sectional area Ct of the groove(s) to the average cross-sectional area A of the expanded bead is 0.02 or more and 0.75 or less, and the average outer diameter D of the expanded bead is 0.5 mm or more and 10 mm or less, in the cut surface obtained by cutting each of the expanded beads at the center in the axial direction along the plane perpendicular to the axial direction. In addition, a ratio L/D of the average length L of the expanded bead in the axial direction to the average outer diameter D of the expanded bead is 0.5 or more and 2.0 or less.

As described above, by performing in-mold molding in such a manner that the open cell content of the molded article falls within the above-specified range using expanded beads each having a shape in which the dimension of each part satisfies the specific range, significant shrinkage, deformation, and the like are curtailed even when the aging step is omitted, so that a molded article having a desired shape and being excellent in appearance and rigidity can be produced.

The reason why such an effect is obtained by the expanded beads is considered to be, for example, as follows. That is, when the expanded beads are subjected to in-mold molding, an open cell structure including open cells, that is, a minute space portion communicating with the outside of the molded article is formed in the molded article. Specifically, the open cell structure is formed by complicatedly connecting voids formed by allowing grooves of a plurality of expanded beads to communicate with each other, voids formed by allowing the grooves of the expanded beads to communicate with voids formed between the expanded beads, voids formed by allowing voids between the expanded beads to communicate with each other, open cell portions of the expanded beads constituting the molded article, and the like.

It is considered that because the open cell structure communicates with the outside of the molded article, in the case where the molded article having an appropriate open cell content is released from the mold, the outside air quickly flows into the cells in the molded article through the open cell structure. Then, the inflow of outside air into the cells in the molded article helps to quickly balance the internal pressure of the entire molded article with the pressure of the atmosphere outside the molded article. It is considered that as a result, the dimension of the molded article is likely to be stabilized early and it is possible to avoid significant shrinkage and deformation of the molded article even when the aging step is not performed.

In addition, the expanded beads each have the groove(s) extending along the axial direction thereof, and thus it is considered that when steam is supplied into the mold, the steam can pass through the grooves. Accordingly, it is considered that steam easily reaches the inside of the mold, and the entire expanded beads in the mold can be easily heated. This makes it possible to obtain a molded article that has excellent fusion-bondability and good appearance even under conditions where the molding heating temperature during in-mold molding is low. As a result, the heat received by the expanded beads from the steam during the in-mold molding can be curtailed to a low level. In addition, an excessive increase in the internal temperature of the molded article after demolding is avoided. As a result of these, it is considered that the dimension of the molded article after in-mold molding is likely to stabilize early.

The expanded beads to be used in the production method each have a columnar shape having no through-hole. Because the expanded beads each have no through-hole therein, the expanded beads are likely to expand outward due to secondary expansion during in-mold molding, and secondary expandability is high. Accordingly, by not providing any through-hole in the expanded bead, the open cell content of the molded article to be described below can be easily prevented from excessively increasing, and a molded article excellent in appearance and rigidity can be easily produced.

In the case where the ratio Ca/A of the average cross-sectional area Ca per groove to the average cross-sectional area A of the expanded bead and/or the ratio Ct/A of the total cross-sectional area Ct of the groove(s) to the average cross-sectional area A of the expanded bead is too low, steam is less likely to spread in the mold during in-mold molding, and moldability may be deteriorated. In this case, the open cell structure is less likely to be formed in the molded article, and the aging step may be required to avoid significant shrinkage and deformation of the molded article. By setting the ratio Ca/A to 0.01 or more and the ratio Ct/A to 0.02 or more, these problems can be avoided easily, and expanded beads capable of curtailing significant shrinkage and deformation of the molded article can be obtained even when the aging step is not performed. In addition, by using such expanded beads, the water cooling time during in-mold molding can be shortened. From the viewpoint of obtaining these functions and effects more reliably, the ratio Ca/A is preferably 0.02 or more, and more preferably 0.03 or more. From the same viewpoint, the ratio Ct/A is preferably 0.05 or more, more preferably 0.08 or more, and even more preferably 0.10 or more.

On the other hand, in the case where the ratio Ca/A of the average cross-sectional area Ca per groove to the average cross-sectional area A of the expanded bead and/or the ratio Ct/A of the total cross-sectional area Ct of the groove(s) to the average cross-sectional area A of the expanded bead is too high, the rigidity of the molded article may decrease and the appearance of the molded article may deteriorate. In this case, the open cell content of the molded article may become excessively high. By setting the ratio Ca/A to 0.25 or less and the ratio Ct/A to 0.75 or less, these problems can be easily avoided, and the rigidity and appearance of the molded article can be improved. From the viewpoint of more reliably achieving such functions and effects, the ratio Ca/A is preferably 0.20 or less, more preferably 0.15 or less, and even more preferably 0.10 or less. From the same viewpoint, the ratio Ct/A is preferably 0.70 or less, more preferably 0.50 or less, even more preferably 0.30 or less, particularly preferably 0.20 or less, and most preferably 0.18 or less.

In configuring a preferable range of the ratio Ca/A, the upper limit and the lower limit of the ratio Ca/A described above can be arbitrarily combined. For example, the preferable range of the ratio Ca/A may be 0.01 or more and 0.20 or less, 0.02 or more and 0.15 or less, or 0.03 or more and 0.10 or less.

Similarly, in configuring the preferable range of the ratio Ct/A, the upper limit and the lower limit of the ratio Ct/A described above can be arbitrarily combined. For example, the preferable range of the ratio Ct/A may be 0.02 or more and 0.50 or less, 0.02 or more and 0.20 or less, 0.05 or more and 0.20 or less, or 0.10 or more and 0.18 or less.

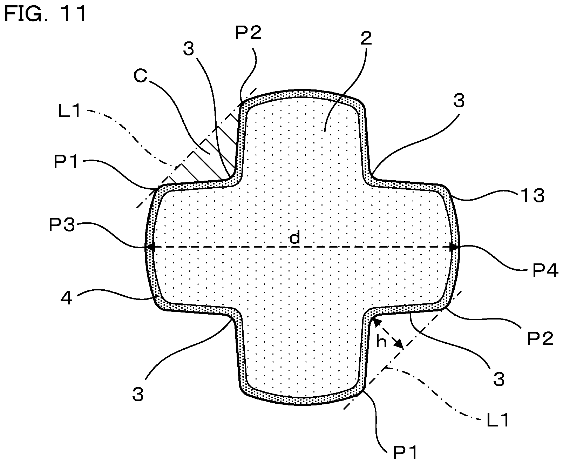

The method of calculating the average cross-sectional area A of the expanded bead described above is as follows. First, the expanded bead 1 is cut at the center in the axial direction thereof along a plane perpendicular to the axial direction to expose a cut surface (that is, the surface of the cut portion generated when the expanded bead is cut) as illustrated in Fig. 2 and the like. The cross-sectional area of the expanded bead 1 at the cut surface is measured. For example, as illustrated in Fig. 2, when the expanded bead 1 includes only the foamed layer 2, the cross-sectional area of the expanded bead 1 is equal to the cross-sectional area of the foamed layer 2 at the cut surface. As illustrated in Fig. 11, when the expanded bead 1 has the foamed layer 2 and the cover layer 4 covering the foamed layer 2, the cross-sectional area of the expanded bead 1 is the sum of the cross-sectional area of the foamed layer 2 and the cross-sectional area of the cover layer 4 at the cut surface. The cross-sectional area of the expanded bead 1 at the cut surface can be measured, for example, by taking a photograph of the cut surface of the expanded bead and performing image analysis.

The above operation is performed on 100 or more expanded beads, and the arithmetic average value of the cross-sectional areas of the expanded beads obtained is defined as the average cross-sectional area A of the expanded bead at the cut surfaces.

The method of calculating the average cross-sectional area Ca per groove and the total cross-sectional area Ct of the groove(s) is as follows. As illustrated in Fig. 2 and the like, a tangent line L1 that is in contact with the contour of the expanded bead 1 at two points P1 and P2, and that does not pass through the inside of the expanded bead 1 is drawn in the outside of each groove 3 in the cut surface of the expanded bead. Then, the area of the region surrounded by the contour of the expanded bead 1 and the tangent line L1 is calculated. This area is defined as the cross-sectional area C of each groove 3. That is, the cross-sectional area C of each groove 3 is the area of the hatched region in Fig. 2. The above operation is performed for all the groove(s) 3, and these areas are summed to calculate the total of the cross-sectional areas C of the groove(s) 3 in each expanded bead 1. The total of the cross-sectional areas C of the groove(s) 3 thus obtained is divided by the number of grooves 3 to calculate the cross-sectional area per groove in each expanded bead 1.

The above operation is performed on 100 or more expanded beads, and the arithmetic average value of the total cross-sectional areas of the grooves obtained is defined as the total cross-sectional area Ct of the groove(s). In addition, an average value of the obtained cross-sectional areas per groove is defined as the average cross-sectional area Ca per groove.

In the case where the average outer diameter D of the expanded bead at the cut surface is too small, the molded article is easily deformed or shrunk when the aging step is omitted, and dimensional stability may deteriorate. By setting the average outer diameter D of the expanded bead to 0.5 mm or more, preferably 1.0 mm or more, and more preferably 2.0 mm or more, such a problem can be easily avoided.

On the other hand, when the average outer diameter D of the expanded bead is too large, the filling property into the mold may deteriorate. By setting the average outer diameter D of the expanded bead to 10 mm or less, preferably 8.0 mm or less, and more preferably 5.0 mm or less, such a problem can be easily avoided.

In configuring a preferable range of the average outer diameter D of the expanded bead, the upper limit and the lower limit of the average outer diameter D described above can be arbitrarily combined. For example, the preferable range of the average outer diameter D may be 0.5 mm or more and 10 mm or less, 1.0 mm or more and 8.0 mm or less, or 2.0 mm or more and 5.0 mm or less.

When the ratio LID of the average length L of the expanded bead in the axial direction to the average outer diameter D of the expanded bead is too high, the open cell content of the molded article may be too large. In this case, the surface property of the molded article may be deteriorated, and the rigidity of the molded article may be lowered. In addition, the water leakage preventing property of the molded article may be insufficient depending on the application. By setting the value of the ratio LID to 2.0 or less, these problems can be easily avoided. From such a viewpoint, the ratio LID of the average length L of the expanded bead in the axial direction to the average outer diameter D of the expanded bead is preferably 1.5 or less, and more preferably less than 1.3.

On the other hand, when the ratio LID of the average length L of the expanded bead in the axial direction to the average outer diameter D of the expanded bead is too low, the water cooling time during in-mold molding may be lengthened. In addition, as a result of the open cell content of the molded article becoming too small, it may be difficult to curtail the deformation of the molded article in the case where the aging step is omitted. By setting the value of the ratio LID to 0.5 or more, such problems can be easily avoided. From the same viewpoint, the ratio LID of the average length L of the expanded bead in the axial direction to the average outer diameter D of the expanded bead is preferably 0.7 or more, and more preferably more than 0.7.

In configuring a preferable range of the ratio L/D, the upper limit and the lower limit of the ratio LID described above can be arbitrarily combined. For example, the preferable range of the ratio LID may be 0.5 or more and 2.0 or less, 0.5 or more and 1.5 or less, 0.7 or more and 1.5 or less, or more than 0.7 and less than 1.3.

The method of calculating the average outer diameter D of the expanded bead described above is as follows.

First, the expanded bead 1 is cut at the center in the axial direction thereof along a plane perpendicular to the axial direction to expose a cut surface of the expanded bead 1 as illustrated in Fig. 2 and the like. Two points P3 and P4 are set on the contour of the expanded bead 1 in the cut surface in such a manner that the distance between the two points is the longest, and the distance (that is, the maximum outer diameter of the expanded bead in the cut surface) between these two points is defined as the outer diameter d of each expanded bead 1. The arithmetic average value of the outer diameters d measured for 100 or more expanded beads 1 is defined as the average outer diameter D of the expanded bead. The outer diameter of the expanded bead 1 in the cut surface can be measured, for example, by taking a photograph of the cut surface of the expanded bead and performing image analysis.

The average length L of the expanded bead described above is an arithmetic average value of maximum lengths in the axial direction of the expanded beads measured for 100 or more expanded beads. The maximum length of the expanded bead in the axial direction can be measured using, for example, a caliper.

The closed cell content of the expanded bead is preferably 90% or more, more preferably 92% or more, and even more preferably 95% or more. By setting the closed cell content of the expanded bead to 90% or more, even when the filling rate into the mold is relatively low, an appropriate open cell structure can be formed in the molded article, and a molded article excellent in surface properties and rigidity can be more easily obtained.

The closed cell content of the expanded bead can be measured using an air comparison pycnometer based on ASTM-D6226-10. Specifically, measurement is performed as follows. First, expanded beads are allowed to stand for 24 hours or longer in an environment of a relative humidity of 50%, a temperature of 23°C, and an atmospheric pressure of 1 atm to condition the expanded beads. A measurement sample is collected from the expanded beads after the conditioning in such a manner that the bulk volume, that is, the value of a marked line when the expanded beads are naturally deposited in a measuring cylinder is about 20 cm$^3$, and then the apparent volume of the measurement sample is measured. Specifically, the apparent volume of the measurement sample is a volume corresponding to the amount of rise in liquid level when the measurement sample is immersed in ethanol having a temperature of 23°C contained in the measuring cylinder.

After the measurement sample whose apparent volume has been measured is sufficiently dried, the true volume value of the measurement sample is measured by AccuPic II1340 manufactured by Shimadzu Corporation, in accordance with the procedure described in ASTM-D6226-10. In the measurement of the true volume Vx, the pressure applied in the purging step and the testing step is set to 5 kPa. In addition, in procedures 9.13 and 9.14, the pressure is recorded after waiting until the rate of change in pressure becomes 0.100 kPa/min or less. Using these volume values, the closed cell content (unit: %) of the measurement sample is calculated based on the following formula (6).

$$\text{Closed cell content} = (Vx\text{-}W/\rho) \times 100/(Va\text{-}W/\rho) \cdots (6)$$

In the formula (6), Vx (unit: cm$^3$) is the true volume (that is, the sum of the volume of the resin constituting the expanded beads and the total cell volume of the closed cell portions in the expanded beads) of the expanded beads, Va (unit: cm$^3$) is the apparent volume (that is, the volume measured from the increase in liquid level when the expanded beads are immersed in ethanol contained in the measuring cylinder) of the expanded beads, W (unit: g) is the mass of the measurement sample, and $\rho$ (unit: g/cm$^3$) is the density of the crystalline thermoplastic resin constituting the foamed layer.

The above operation is performed five times using different measurement samples, and the arithmetic average value of the closed cell contents obtained by these five measurements is defined as the closed cell content of the expanded bead.

From the viewpoint that the open cell content of the resulting molded article can be more easily adjusted to the above-described range and that when the aging step is omitted, shrinkage and deformation of the molded article can be more reliably curtailed, preferably, the expanded beads have a closed cell content of 90% or more,

in the cut surface obtained by cutting each of the expanded beads at the center in the axial direction along the plane perpendicular to the axial direction, the ratio Ca/A of the average cross-sectional area Ca per groove to the average cross-sectional area A of the expanded bead is 0.01 or more and 0.20 or less, the ratio Ct/A of the total cross-sectional area Ct of the groove(s) to the average cross-sectional area A of the expanded bead is 0.02 or more and 0.20 or less, and

the ratio LID of the average length L of the expanded bead in the axial direction to the average outer diameter D of the expanded bead is 0.5 or more and 1.5 or less.

The bulk ratio of the expanded beads is preferably 15 times or more and 90 times or less. By performing in-mold molding of expanded beads having a bulk ratio within the above range, the molded article, which is lightweight and excellent in rigidity, can be easily obtained. In addition, the expanded beads, which have the specific shape and of which the closed cell content is set within the specific range, make it possible to more easily obtain a molded article having small shrinkage and deformation even when the aging step is omitted in the range of the bulk ratio of 15 times or more and 90 times or less.

The bulk ratio of the expanded beads is a value obtained by dividing the density (unit: kg/m$^3$) of the crystalline thermoplastic resin constituting the foamed layer by the bulk density (unit: kg/m$^3$) of the expanded beads. The method of calculating the bulk density of the expanded beads is as follows. First, expanded beads are allowed to stand for 24 hours or longer in an environment of a relative humidity of 50%, a temperature of 23°C, and an atmospheric pressure of 1 atm to condition the expanded beads. Next, the expanded beads after the conditioning are filled in the measuring cylinder so as to be naturally deposited, and the bulk volume (unit: L) of the expanded beads is read from the scale of the measuring cylinder. Then, a mass (unit: g) of the expanded beads in the measuring cylinder is divided by the above-described bulk volume and the resulting value is subjected to unit conversion, so that the bulk density (unit: kg/m$^3$) of the expanded beads can be obtained.

The average cross-sectional area Ca per groove in the cut surface of the expanded bead is preferably 0.05 mm$^2$ or more and 2.0 mm$^2$ or less. By setting the ratio Ca/A of the average cross-sectional area Ca per groove to the average cross-sectional area A of the expanded bead described above to the specific range, and the average cross-sectional area Ca per groove is set to the specific range, the effect by the groove described above can be obtained more reliably. From such a viewpoint, the lower limit of the average cross-sectional area Ca per groove is more preferably 0.1 mm$^2$, and even more preferably 0.2 mm$^2$. The upper limit of the average cross-sectional area Ca per groove is more preferably 1.8 mm$^2$, even more preferably 1.2 mm$^2$, particularly preferably 1.0 mm$^2$, and most preferably 0.8 mm$^2$.

In configuring a preferable range of the average cross-sectional area Ca per groove, the upper limit and the lower limit of the average cross-sectional area Ca described above can be arbitrarily combined. For example, the preferable range of the average cross-sectional area Ca per groove may be 0.1 mm$^2$ or more and 1.8 mm$^2$ or less, 0.05 mm$^2$ or more and 1.2 mm$^2$ or less, 0.1 mm$^2$ or more and 1.0 mm$^2$ or less, or 0.2 mm$^2$ or more and 0.8 mm$^2$ or less.

A ratio H/D of an average depth H per groove to the average outer diameter D of the expanded bead in the cut surface of the expanded bead is preferably 0.35 or less. In this case, the open cell structure is likely to be appropriately formed in the molded article, and shrinkage and deformation of the molded article when the aging step is omitted can be more effectively curtailed. Furthermore, in this case, in addition to the effects described above, the rigidity of the molded article can be increased. From the viewpoint of more enhancing such effects, the ratio H/D of the average depth H per groove to the average outer diameter D of the expanded bead is more preferably 0.30 or less, even more preferably 0.25 or less, still even more preferably 0.20 or less, particularly preferably 0.18 or less, and most preferably 0.15 or less.

From the same viewpoint, the average depth H per groove in the cut surface of the expanded bead is preferably 1.5 mm or less, more preferably 1.2 mm or less, even more preferably 1.0 mm or less, still even more preferably 0.8 mm or less, and particularly preferably 0.5 mm or less.

From the viewpoint of suppressing an excessive decrease in the open cell content of the molded article, the ratio H/D of the average depth H per groove to the average outer diameter D of the expanded bead in the cut surface of the expanded bead is preferably 0.02 or more, and more preferably 0.05 or more. From the same viewpoint, the average depth H per groove in the cut surface is preferably 0.1 mm or more, and more preferably 0.2 mm of more.

In configuring a preferable range of the ratio H/D of the average depth H per groove to the average outer diameter D of the expanded bead, the upper limit and the lower limit of the ratio H/D described above can be arbitrarily combined. For example, the preferable range of the ratio H/D may be 0.02 or more and 0.30 or less, or 0.05 or more and 0.20 or less. Similarly, in configuring a preferable range of the average depth H per groove in the cur surface, the upper limit and the lower limit of the average depth H described above can be arbitrarily combined. For example, the preferable range of the average depth H per groove in the cut surface may be 0.1 mm or more and 1.5 mm or less, or 0.2 mm or more and 1.0 mm or less.

A method of calculating the average depth H per groove in the cut surface is as follows. First, the expanded bead 1 is cut at the center in the axial direction thereof along a plane perpendicular to the axial direction to expose a cut surface of the expanded bead as illustrated in Fig. 2 and the like. Next, a tangent line L1 that is in contact with the contour of the expanded bead 1 at two points P1 and P2, and that does not pass through the inside of the expanded bead 1 is drawn in the outside of each groove 3 in the cut surface of the expanded bead 1. The maximum value h of the distance from the tangent line L1 to the peripheral edge (that is, the contour of the expanded bead) of the groove 3 in a direction perpendicular to the tangent line L1 is measured. Then, the maximum value h of the distance described above is measured for all the groove(s) 3, and the arithmetic average value thereof is defined as the depth of the groove of each expanded bead. The depth of the groove of each expanded bead in the cut surface can be measured, for example, by taking a photograph of the cut surface of the expanded bead and performing image analysis.

The arithmetic average value of the depth of the groove measured for 100 or more expanded beads 1 is defined as the depth H of the groove of the expanded bead.

A ratio A/B of the average cross-sectional area A of the expanded bead to an area B of a virtual perfect circle having the average outer diameter D of the expanded bead as a diameter is 0.35 or more and 0.90 or less. In this case, it is possible to more easily adjust the open cell content of the molded article to an appropriate range, more easily improve the rigidity and appearance of the molded article, and more reliably obtain the effect of curtailing shrinkage and deformation of the molded article when the aging step is not performed. From the viewpoint of further easily improving the rigidity and appearance of the molded article, the ratio A/B is more preferably 0.40 or more, even more preferably 0.55 or more, still even more preferably 0.60 or more, particularly preferably 0.65 or more, and most preferably 0.70 or more. In addition, from the viewpoint of more reliably obtaining the effect of curtailing shrinkage and deformation of the molded article, the ratio A/B is more preferably 0.85 or less, and even more preferably 0.80 or less.

In configuring a preferable range of the ratio A/B of the average cross-sectional area A of the expanded bead to the area B of the virtual true circle, the upper limit and the lower limit of the ratio A/B described above can be arbitrarily combined. For example, a preferable range of the ratio A/B may be 0.55 or more and 0.90 or less.

The ratio of the apparent density to the bulk density of the expanded beads is preferably 1.7 or more and 1.9 or less. In this case, it is possible to more easily adjust the open cell content of the molded article to an appropriate range, more easily improve the rigidity and appearance of the molded article, and more reliably obtain the effect of curtailing shrinkage and deformation of the molded article when the aging step is not performed.

From the viewpoint of a balance between the lightweight property and rigidity of the molded article, the apparent density of the expanded beads is preferably 10 kg/m$^3$ or more and 150 kg/m$^3$ or less, more preferably 15 kg/m$^3$ or more and 100 kg/m$^3$ or less, even more preferably 20 kg/m$^3$ or more and 80 kg/m$^3$ or less, and particularly preferably 25 kg/m$^3$ or more and 45 kg/m$^3$ or less. By performing in-mold molding of expanded beads having a small apparent density in this way, a more lightweight molded article can be easily obtained. Conventionally, in the case of producing a molded article having a particularly low density (that is, a molded article having a high molded article ratio), the molded article is likely to be remarkably deformed after demolding, and thus it is difficult to omit the aging step. In contrast, in the expanded beads, the aging step can be omitted even if the apparent density is small, and thus a lightweight molded article having a desired shape can be produced even without aging.

The method of calculating the apparent density of the expanded beads is as follows. First, expanded beads are allowed to stand for one day in an environment of a relative humidity of 50%, a temperature of 23°C, and an atmospheric pressure of 1 atm to condition the expanded beads. After measuring the mass (unit: g) of the expanded beads, the expanded beads are immersed in alcohol (for example, ethanol) having a temperature of 23°C contained in a measuring cylinder with a wire mesh or the like, and the volume (unit: L) of the expanded beads is determined from the increase in the liquid level. Then, the value obtained by dividing the mass (unit: g) of the expanded beads by the volume of the expanded beads is subjected to unit conversion, whereby the apparent density (unit: kg/m$^3$) of the expanded beads can be calculated.

The base resin of the foamed layer in the expanded bead is a crystalline thermoplastic resin. The crystalline thermoplastic resin is a thermoplastic resin having crystallinity, and examples thereof include a polypropylene-based resin, a polyethylene-based resin, a polyamide-based resin, and a crystalline polyester-based resin. In this description, the polypropylene-based resin is a term referring to a homopolymer of a propylene monomer and a propylene-based copolymer containing 50 mass% or more of a structural unit derived from propylene. The polyethylene-based resin is a term referring to a homopolymer of an ethylene monomer, and an ethylene-based copolymer containing 50 mass% or more of a structural unit derived from ethylene.

The phrase "having crystallinity" in this description means that a heat of an endothermic peak accompanying melting of the resin, which is determined from a DSC curve obtained at a heating rate of 10°C/min using a heat flux differential scanning calorimeter under the definition of "The case of measurement of heat of fusion after a definite thermal treatment" (setting both a heating rate and a cooling rate during conditioning of a test piece to 10°C/min) that is described in JIS K7122 (1987), is 5 J/g or more. The heat of the endothermic peak is preferably 15 J/g or more, and more preferably 30 J/g or more.

The foamed layer may contain another polymer other than the crystalline thermoplastic resin as long as the above-described effect is not impaired. Examples of the other polymer include an amorphous thermoplastic resin such as a polystyrene-based resin, and an elastomer. The amount of the other polymer in the foamed layer is preferably 20 mass% or less, more preferably 10 mass% or less, even more preferably 5 mass% or less, and 0, that is, it is particularly preferable that the foamed layer substantially contains only the crystalline thermoplastic resin as a polymer.

In addition, the crystalline thermoplastic resin which is the base resin of the foamed layer may contain an additive such as a cell adjusting agent, a crystal nucleating agent, a flame retardant, a flame retardant aid, a plasticizer, an antistatic agent, an antioxidant, an ultraviolet inhibitor, a light stabilizer, a conductive filler, an antibacterial agent, or a colorant as long as the above-described function and effect are not impaired. The amount of the additive in the foamed layer is preferably, for example, 0.01 parts by mass or more and 10 parts by mass or less with respect to 100 parts by mass of the crystalline thermoplastic resin.

The crystalline thermoplastic resin constituting the foamed layer is preferably a polypropylene-based resin, and more preferably a propylene-based copolymer obtained by copolymerizing propylene with another monomer. Preferable examples of propylene-based copolymers include copolymers of propylene and an α-olefin having 4 to 10 carbon atoms, such as an ethylene-propylene copolymer, a butene-propylene copolymer, a hexene-propylene copolymer, and an ethylene-propylene-butene copolymer. These copolymers may be, for example, random copolymers or block copolymers, but are preferably random copolymers. The foamed layer may contain one kind of polypropylene-based resin or two or more kinds of polypropylene-based resins.

Among these polypropylene-based resins, the crystalline thermoplastic resin constituting the foamed layer is particularly preferably an ethylene-propylene random copolymer containing 0.5 mass% or more and 3.5 mass% or less of an ethylene component. According to the expanded beads including such a foamed layer, it is possible to more easily obtain a molded article that is excellent in in-mold moldability, is excellent in rigidity and surface property, and can curtail deformation and shrinkage even when the aging step is omitted.

From the viewpoint of obtaining a molded article having more excellent rigidity and small deformation and shrinkage when the aging step is omitted, the amount of the ethylene component contained in the ethylene-propylene random copolymer is preferably 0.5 mass% or more and less than 2.0 mass%. On the other hand, from the viewpoint of enhancing the moldability of the expanded beads and obtaining a molded article excellent in energy absorption characteristics, the amount of the ethylene component contained in the ethylene-propylene random copolymer is preferably 2.0 mass% or more and 3.5 mass% or less.

The above-described "ethylene component" and "propylene component" mean a constitutional unit derived from ethylene and a constitutional unit derived from propylene in the ethylene-propylene copolymer, respectively. The amount of the ethylene component is a mass ratio of the ethylene component when the total of the ethylene component and the propylene component is 100 mass%. The amount of each component in the ethylene-propylene copolymer can be determined based on the result of IR spectrum measurement.

When the base material resin of the foamed layer is a polypropylene-based resin, the melting point Tmc of the polypropylene-based resin is preferably 155°C or lower. In this case, a molded article excellent in appearance and rigidity can be molded at a lower molding temperature (that is, a low molding pressure). From the viewpoint of improving this effect, the melting point Tmc of the polypropylene-based resin constituting the foamed layer is preferably 152°C or lower, and more preferably 148°C or lower. On the other hand, from the viewpoint of further improving the heat resistance, mechanical strength, and the like of the molded article, the melting point Tmc of the polypropylene-based resin constituting the foamed layer is preferably 135°C or higher, more preferably 138°C or higher, and even more preferably 140°C or higher.

The melting point of the crystalline thermoplastic resin constituting the foamed layer can be determined based on a DSC curve obtained by performing differential scanning calorimetry (that is, DSC) in accordance with JIS K7121-1987. Specifically, first, a test piece is conditioned in accordance with "(2) The case of measurement of melting temperature after a definite heat treatment". The conditioned test piece is heated from 30°C to 200°C at a heating rate of 10°C/min to obtain a DSC curve, and the vertex temperature of the melting peak appearing in the DSC curve is defined as the melting point Tmc of the crystalline thermoplastic resin. In the case where a plurality of melting peaks appears in the DSC curve, the vertex temperature of the melting peak having the largest area is defined as the melting point Tmc.

In the case where the base resin of the foamed layer is a polypropylene-based resin, the melt mass flow rate (that is, MFR) of the polypropylene-based resin is preferably 5 g/10 min or more, more preferably 6 g/10 min or more, and even more preferably 7 g/10 min or more. In this case, expandability and moldability can be further enhanced. On the other hand, from the viewpoint of further enhancing the rigidity of the molded article, the MFR of the polypropylene-based resin is preferably 12 g/10 min or less, and more preferably 10 g/10 min or less. The MFR of the polypropylene-based resin is a value measured under the conditions of a test temperature of 230°C and a load of 2.16 kg based on JIS K7210-1:2014.

In the case where the base resin of the foamed layer is a polypropylene-based resin, the flexural modulus of the polypropylene-based resin is preferably 800 MPa or more and 1600 MPa or less. From the viewpoint of enhancing the rigidity of the molded article and from the viewpoint of more reliably curtailing the dimensional change when the aging step is omitted, the flexural modulus of the polypropylene-based resin constituting the foamed layer is preferably 800 MPa or more, more preferably 850 MPa or more, even more preferably 900 MPa or more, and most preferably 1200 MPa or more. On the other hand, from the viewpoint that a molded article excellent in appearance and rigidity can be molded at a lower molding temperature (that is, a low molding pressure) and from the viewpoint of obtaining a molded article of expanded beads excellent in energy absorption characteristics, the flexural modulus of the polypropylene-based resin constituting the foamed layer is preferably less than 1200 MPa, more preferably 1100 MPa or less, and even more preferably 1000 MPa or less. The flexural modulus of the polypropylene-based resin can be determined based on JIS K7171:2008.

Conventionally, especially in the case of in-mold molding of expanded beads including a polypropylene-based resin with a flexural modulus of less than 1200 MPa, the molded article released from the mold tends to significantly shrink and deform when the aging step is omitted, probably because the resistance to shrinkage and deformation after demolding is small. On the other hand, according to the method for producing a molded article described above, for example, even when expanded beads including a polypropylene-based resin having a flexural modulus of less than 1200 MPa are used, the aging step can be omitted.

The expanded beads each may have a multilayer structure having a foamed layer and a cover layer covering the foamed layer. In this case, the cover layer may cover the entire foamed layer, or may cover a part of the foamed layer. The base resin of the cover layer is preferably a thermoplastic resin having a melting point or a softening point lower than the melting point of the crystalline thermoplastic resin which is the base resin of the foamed layer. In the case where the base resin of the cover layer is the same type of crystalline thermoplastic resin as the base resin of the foamed layer, the base resin of the cover layer preferably has a crystallization degree lower than the crystallization degree of the crystalline thermoplastic resin which is the base resin of the foamed layer. By covering the foamed layer with such a thermoplastic resin, the expanded beads can be fusion-bonded at a lower molding temperature (that is, a low molding pressure) in in-mold molding. As a result, shrinkage and deformation of the molded article in the case of omitting the aging step can be more reliably curtailed.

The thermoplastic resin constituting the cover layer may be a crystalline thermoplastic resin or an amorphous thermoplastic resin. As the crystalline thermoplastic resin to be used for the cover layer, for example, the same type of crystalline thermoplastic resin as the crystalline thermoplastic resin constituting the foamed layer can be used. Examples of the amorphous thermoplastic resin to be used for the cover layer include a polystyrene-based resin and an amorphous polyester-based resin. In the case where the foamed layer includes a polypropylene-based resin, the base resin of the cover layer is preferably a polyolefin-based resin, more preferably one or more resins selected from the group consisting of a polyethylene-based resin and a polypropylene-based resin, and even more preferably a polypropylene-based resin, from the viewpoint of adhesiveness to the foamed layer. Examples of polypropylene-based resins to be used as the base resin of the cover layer include an ethylene-propylene copolymer, an ethylene-butene copolymer, an ethylene-propylene-butene copolymer, and a propylene homopolymer. Among these, it is particularly preferable to use one or more copolymers selected from the group consisting of an ethylene-propylene copolymer and an ethylene-propylene-butene copolymer as the base resin of the cover layer.

In the case where the thermoplastic resin constituting the cover layer is a crystalline thermoplastic resin, the difference $T_{mc} - T_{ms}$ between the melting point $T_{mc}$ of the crystalline thermoplastic resin constituting the foamed layer and the melting point $T_{ms}$ of the crystalline thermoplastic resin constituting the cover layer is preferably 5°C or more, more preferably 6°C or more, and even more preferably 8°C or more. In this case, the fusion-bondability of the expanded beads can be further improved, and the molding temperature can be further lowered. On the other hand, the difference $T_{mc} - T_{ms}$ between the melting point $T_{mc}$ and the melting point $T_{ms}$ is preferably 35°C or less, more preferably 20°C or less, and even more preferably 15°C or less from the viewpoint of avoiding delamination between the foamed layer and the cover layer, mutual adhesion between the expanded beads, and the like. The melting point of the crystalline thermoplastic resin to be used for the cover layer is determined based on JIS K7121:1987. More specifically, the melting point of the crystalline thermoplastic resin to be used for the cover layer can be determined under the same conditions and by the same method as those for the polypropylene-based resin constituting the foamed layer described above.

In the case where the thermoplastic resin constituting the cover layer is an amorphous thermoplastic resin, the difference $T_{mc} - T_{ss}$ between the melting point $T_{mc}$ of the crystalline thermoplastic resin constituting the foamed layer and the softening point $T_{ss}$ of the amorphous thermoplastic resin constituting the cover layer is preferably 5°C or more, more preferably 6°C or more, and even more preferably 8°C or more. In this case, the fusion-bondability of the expanded beads can be further improved, and the molding temperature can be further lowered. On the other hand, the difference $T_{mc} - T_{ss}$ between the melting point $T_{mc}$ and the softening point $T_{ss}$ is preferably 35°C or less, and more preferably 20°C or less, from the viewpoint of avoiding delamination between the foamed layer and the cover layer, mutual adhesion between the expanded beads, and the like. The softening point of the amorphous thermoplastic resin to be used for the cover layer is a Vicat softening point measured by the A50 method based on JIS K7206:1999.

The thermoplastic resin constituting the cover layer may contain an additive such as a crystal nucleating agent, a flame retardant, a flame retardant aid, a plasticizer, an antistatic agent, an antioxidant, an ultraviolet inhibitor, a light stabilizer, a conductive filler, an antibacterial agent, or a colorant as long as the above-described function and effect are not impaired. The amount of the additive in the cover layer is preferably, for example, 0.01 parts by mass or more and 10 parts by mass or less with respect to 100 parts by mass of the thermoplastic resin.

The cover layer of the expanded bead may be in a foamed state or in a non-foamed state, but is preferably in a substantially non-foamed state. The term "substantially non-foamed" includes a state in which the cover layer is not expanded and no cell is contained and a state in which cells disappear after expansion, which means that the cover layer has almost no cell structure. The thickness of the cover layer is, for example, 0.5 μm or more and 100 μm or less. Further, an intermediate layer may be additionally provided between the foamed layer and the cover layer.

The mass ratio (ratio of mass%) of the resin constituting the foamed layer to the resin constituting the cover layer is preferably foamed layer : cover layer = 99.5 : 0.5 to 80 : 20, more preferably 99 : 1 to 85 : 15, and even more preferably 97 : 3 to 88 : 12, from the viewpoint of enhancing the moldability while maintaining the rigidity of the molded article.

The expanded bead preferably has a crystal structure in which an endothermic peak due to melting inherent to the crystalline thermoplastic resin constituting the foamed layer and one or more melting peaks located on a higher temperature side than the endothermic peak appear in a DSC curve obtained when the expanded bead is heated from 23°C to 200°C at a heating rate of 10°C/min. The expanded bead having such a crystal structure is excellent in mechanical strength and moldability. Hereinafter, the endothermic peak due to melting inherent to the crystalline thermoplastic resin appearing in the DSC curve is referred to as a "resin intrinsic peak", and the melting peak appearing on a higher temperature side than the resin intrinsic peak is referred to as a "high-temperature peak". The resin intrinsic peak is generated by the endotherm of the melting of the crystals inherently existing in the crystalline thermoplastic resin that constitutes the foamed layer. On the other hand, it is estimated that the high-temperature peak is caused by the melting of secondary crystals formed in the crystalline thermoplastic resin constituting the foamed layer during the production process of the expanded beads. That is, in the case where a high-temperature peak appears in the DSC curve, it is estimated that secondary crystals are formed in the crystalline thermoplastic resin.

Whether or not the expanded beads have the above-described crystal structure can be determined based on the DSC curve obtained by performing differential scanning calorimetry (DSC) under the above-described conditions in accordance with JIS K7121:1987. In performing DSC, 1 to 3 mg of expanded beads can be used as a sample.

As described above, in the DSC curve obtained by heating from 23°C to 200°C at a heating rate of 10°C/min (that is, first heating), then cooling from 200°C to 23°C at a cooling rate of 10°C/min, and then heating from 23°C to 200°C again at a heating rate of 10°C/min (that is, second heating), only an endothermic peak due to melting inherent to the crystalline thermoplastic resin constituting the foamed layer is observed. Thus, by comparing the DSC curve obtained at the time of the first heating with the DSC curve obtained at the time of the second heating, the resin intrinsic peak and the high-temperature peak can be distinguished. The vertex temperature of the resin intrinsic peak may be slightly different between the first heating and the second heating, but the difference is usually within 5°C.

The heat of fusion of the high-temperature peak of the expanded beads is preferably 5 J/g or more and 40 J/g or less, more preferably 7 J/g or more and 30 J/g or less, and even more preferably 10 J/g or more and 20 J/g or less, from the viewpoint of further improving the moldability of the expanded beads and from the viewpoint of obtaining a molded article having more excellent rigidity.

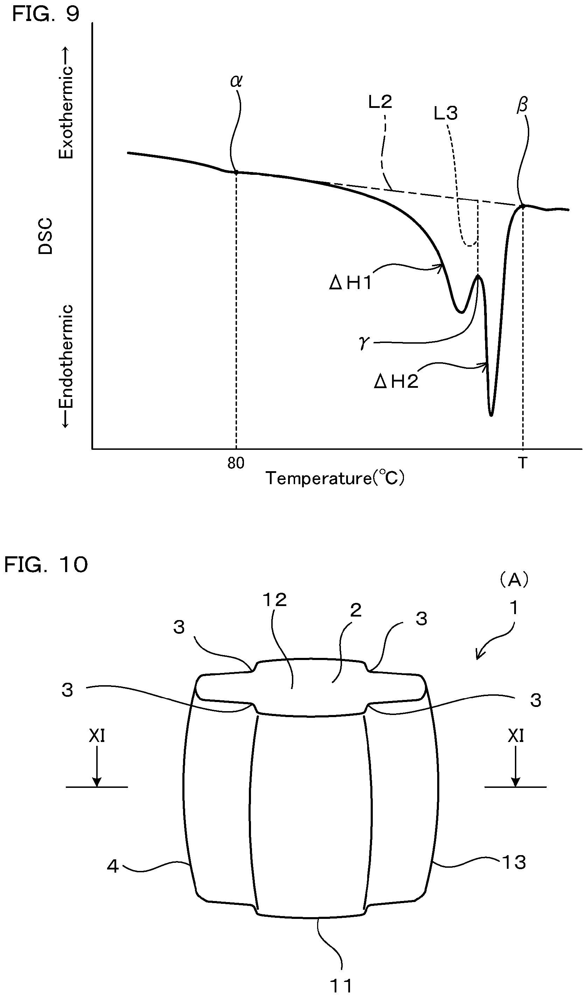

The heat of fusion of the high-temperature peak described above is a value obtained as follows. First, 1 to 3 mg of the expanded beads after conditioning are used as a sample, and differential scanning calorimetry is performed under the condition of heating from 23°C to 200°C at a heating rate of 10°C/min to obtain a DSC curve. Fig. 9 shows an example of the DSC curve. When the expanded beads have a high-temperature peak, as shown in Fig. 9, a resin intrinsic peak $\Delta H1$ and a high-temperature peak $\Delta H2$ having a peak on a higher temperature side than the peak of the resin intrinsic peak $\Delta H1$ appear in the DSC curve.

Next, a straight line L2 connecting a point $\alpha$ corresponding to 80°C on the DSC curve and a point $\beta$ corresponding to the melting end temperature T of the expanded beads is drawn. The melting end temperature T is an end point on the high temperature side of the high-temperature peak $\Delta H2$, that is, an intersection of the high-temperature peak $\Delta H2$ and the baseline on the higher temperature side than the high-temperature peak $\Delta H2$ in the DSC curve.

After the straight line L2 is drawn, a straight line L3 that passes through the maximum point $\gamma$ present between the resin intrinsic peak $\Delta H1$ and the high-temperature peak $\Delta H2$ and is parallel to the vertical axis of the graph is drawn. The straight line L3 divides the resin intrinsic peak $\Delta H1$ and the high-temperature peak $\Delta H2$. The endothermic heat of the high-temperature peak $\Delta H2$ can be calculated based on the area of the portion surrounded by the portion constituting the high-temperature peak $\Delta H2$ in the DSC curve, the straight line L2, and the straight line L3.

(Method for producing expanded beads)

The expanded beads can be produced, for example, by a method in which crystalline thermoplastic resin particles (hereinafter, referred to as "resin particles") made of a crystalline thermoplastic resin as a base resin are dispersed in a dispersion medium, and the resin particles are impregnated with a blowing agent, then the resin particles containing the blowing agent are released together with the dispersion medium under a low pressure. Such an expansion method is sometimes referred to as a "direct expansion method".

The resin particles can be prepared by, for example, a strand cutting method. In the strand cutting method, first, a crystalline thermoplastic resin to be a base resin of the foamed layer and an additive such as a cell nucleating agent supplied as necessary are supplied into an extruder, and heated and kneaded to obtain a resin melt-kneaded product. Thereafter, the resin melt-kneaded product is extruded from a small hole of a die attached to the tip of the extruder to form a columnar extrudate having a groove(s). The extrudate is cooled and then cut to a desired length, whereby resin particles having a single layer structure composed of a core layer made of a crystalline thermoplastic resin as a base resin can be obtained.

In the case where expanded beads having a multilayer structure including a foamed layer and a cover layer are to be obtained, it is sufficient to prepare resin particles having a multilayer structure with a coextrusion apparatus including an extruder for forming a core layer, an extruder for forming a cover layer, and a coextrusion die connected to these two extruders. In this case, in the extruder for forming a core layer, the crystalline thermoplastic resin to be the base resin of the foamed layer and an additive or the like added as necessary are melt-kneaded to prepare a resin melt-kneaded product for forming a core layer. In the extruder for forming a cover layer, a thermoplastic resin to be a base resin of the cover layer and an additive or the like added as necessary are melt-kneaded to prepare a resin melt-kneaded product for forming a cover layer.

These resin melt-kneaded products are co-extruded and joined in the die to form a composite with a multilayer structure including a columnar core layer in a non-foamed state and a cover layer in a non-foamed state covering an outer surface of the core layer. The composite is extruded from a small hole of the die to form a columnar extrudate having a groove(s). After the extrudate is cooled, the extrudate is cut into a desired length, whereby resin particles having a multilayer structure can be obtained. The method for producing resin particles is not limited to the method described above, and a hot cutting method, an underwater cutting method, or the like may be employed.

In the direct expansion method, the resin particle is expanded while generally maintaining the shape of the resin particle. Accordingly, the shape of the expanded bead obtained by the direct expansion method is a shape obtained by generally enlarging the shape of the resin particle. Thus, for example, in the case of obtaining an expanded bead having a cross-shaped cross section in the cut surface, it is sufficient to expand a columnar resin particle having a cross-shaped cross section in the cut surface, which is generated when the resin particle is cut in a plane perpendicular to the axial direction. Such a resin particle having a cross-shaped cross section at the cut surface can be produced, for example, by using a die having a cross-shaped small hole corresponding to the desired shape of the cut surface of the resin particle in the strand cutting method. In this case, the extrusion direction during the production of the resin particles corresponds to the axial direction of the expanded beads.

After preparing the resin particles as described above, the resin particles are dispersed in the dispersion medium. The operation of dispersing the resin particles in the dispersion medium may be performed in a sealed container used in an expansion step to be described below, or may be performed in a container different from the sealed container to be used in the expansion step. From the viewpoint of simplification of the production step, it is preferable to perform the dispersion step in the sealed container to be used in the expansion step.

As the dispersion medium, an aqueous dispersion medium containing water as a main component is used. In addition to water, the aqueous dispersion medium may contain a hydrophilic organic solvent such as ethylene glycol, glycerin, methanol, or ethanol. The proportion of water in the aqueous dispersion medium is preferably 60 mass% or more, more preferably 70 mass% or more, and even more preferably 80 mass% or more.

It is preferable to add a dispersant to the dispersion medium. By adding the dispersant to the dispersion medium, fusion-bonding between the resin particles heated in the container can be avoided in the expansion step. The addition amount of the dispersant is preferably 0.001 parts by mass or more and 5 parts by mass or less per 100 parts by mass of the resin particles. As the dispersant, an organic dispersant or an inorganic dispersant can be used, but it is preferable to use a particulate inorganic substance as the dispersant from the viewpoint of ease of handling. More specifically, as the dispersant, for example, a clay mineral such as amsnite, kaolin, mica, or clay, aluminum oxide, titanium oxide, basic magnesium carbonate, basic zinc carbonate, calcium carbonate, iron oxide, or the like can be used. These dispersants may be used alone, or two or more kinds of dispersants may be used in combination. Among these, a clay mineral is preferably used as the dispersant. The clay mineral may be natural or synthetic.

In the case of using the dispersant, it is preferable to use an anionic surfactant such as sodium dodecylbenzenesulfonate, sodium alkylbenzenesulfonate, sodium lauryl sulfate, or sodium oleate as a dispersion aid in combination with the dispersant. The addition amount of the dispersion aid is preferably 0.001 parts by mass or more and 1 part by mass or less per 100 parts by mass of the resin particles.

After the resin particles are dispersed in the dispersion medium, the resin particles are impregnated with a blowing agent in the sealed container. The blowing agent to be impregnated into the resin particles is preferably a physical blowing agent. Examples of the physical blowing agent include inorganic physical blowing agents such as carbon dioxide, air, nitrogen, helium, and argon, and organic physical blowing agents such as aliphatic hydrocarbons such as propane, butane, and hexane, cyclic aliphatic hydrocarbons such as cyclopentane and cyclohexane, and halogenated hydrocarbons such as chlorofluoromethane, trifluoromethane, 1,1-difluoromethane, 1-chloro -1,1-dichloroethane, 1,2,2,2-tetrafluoroethane, methyl chloride, ethyl chloride, and methylene chloride. These physical blowing agents may be used alone, or two or more kinds of physical blowing agents may be used in combination. In addition, the inorganic physical blowing agent and the organic physical blowing agent may be mixed and used. From the viewpoint of environmental load and handleability, the inorganic physical blowing agent is preferably used, and carbon dioxide is more preferably used.

The addition amount of the blowing agent with respect to 100 parts by mass of the resin particles is preferably 0.1 parts by mass or more and 30 parts by mass or less, and more preferably 0.5 parts by mass or more and 15 parts by mass or less.

As a method for impregnating resin particles with the blowing agent in the production step of expanded beads, a method can be adopted in which the blowing agent is supplied into the sealed container, and the pressure in the sealed container is increased to impregnate the resin particles in the dispersion medium with the blowing agent. At this time, by heating the resin particles together with the dispersion medium, the impregnation of the resin particles with the blowing agent can be further promoted.

The pressure in the sealed container during expansion is preferably 0.5 MPa (G) or more in gauge pressure. On the other hand, the pressure in the sealed container is preferably 4.0 MPa (G) or less in gauge pressure. Within the above range, the expanded beads can be produced safely without the risk of breakage, explosion, or the like of the sealed container.

In addition, in the case of heating the dispersion medium, by setting the temperature raising rate of the dispersion medium to 1 to 5°C/min, the temperature at the expansion can also be set in an appropriate range.

After the impregnation of the resin particles with the blowing agent is completed, the contents of the sealed container are released to a lower pressure environment than the sealed container. As a result, the core layer of each of the resin particles is expanded to form a cell structure, and the cell structure is cooled by the outside air to be stabilized, thereby obtaining expanded beads.

In the case where the base resin of the core layer is a polypropylene-based resin, it is preferable to perform heating and expansion in the following manner at the impregnation with the blowing agent. That is, first, a first holding step of holding at a temperature of (the melting point of the polypropylene-based resin - 20°C) or higher and lower than (the melting end temperature of the polypropylene-based resin) for a sufficient time, preferably about 10 to 60 minutes is performed, and then the temperature is adjusted from (the melting point of the polypropylene-based resin - 15°C) to a temperature lower than (the melting end temperature of the polypropylene-based resin + 10°C). Then, if necessary, a second holding step of further holding at that temperature for a sufficient time, preferably about 10 to 60 minutes is performed. Thereafter, it is preferable to release the content of the sealed container to the outside in a state where the temperature in the sealed container is set to (the melting point of the polypropylene-based resin - 10°C) or higher to expand the resin particles. The temperature in the sealed container during expansion is more preferably (the melting point of the polypropylene-based resin) or higher and (the melting point of the polypropylene-based resin + 20°C) or lower. By heating and expanding the resin particles in this manner, secondary crystals are formed in the polypropylene-based resin constituting the foamed layer, and expanded beads having excellent mechanical strength and excellent moldability can be easily obtained.

In preparing the molded article, the expanded beads obtained as described above may be used as they are. Alternatively, the expanded beads obtained by the direct expansion method described above are further expanded, so that the expanded beads having an increased bulk ratio can be used for preparing a molded article. In the case where the resin particles are expanded in two stages in this manner, the expanding step of the first stage is referred to as a first expanding step, and the expanded beads obtained by the first expanding step are referred to as first-step expanded beads. The expanding step of the second stage is referred to as a second expanding step. The expanded beads obtained by the second expanding step are sometimes referred to as second-step expanded beads.

A method for increasing the bulk ratio of the expanded beads by two-step expansion is, for example, as follows. First, as the first expanding step, the resin particles are expanded by the direct expansion method described above to obtain first-step expanded beads. Thereafter, an internal pressure is applied to the first-step expanded beads. More specifically, the first-step expanded beads are placed in a pressure-resistant container, and then the inside of the pressure-resistant container is pressurized with an inorganic gas such as air or carbon dioxide to impregnate the expanded beads with the inorganic gas. By this process, the pressure in the cells of the first-step expanded beads is set to be equal to or higher than the atmospheric pressure. Thereafter, the first-step expanded beads taken out from the pressure-resistant container are heated using a heating medium such as steam or heated air under an environment of a pressure lower than the pressure in the cells to further expand the first-step expanded beads.

Examples

Examples of the expanded bead, the molded article of expanded beads, and the method for producing the same will be described.

(Polypropylene-based resin)

Table 1 shows the properties and the like of the polypropylene-based resin as the crystalline thermoplastic resin used in the production of the expanded beads. The ethylene-propylene copolymer and the ethylene-propylene-butene copolymer used in the present examples are all random copolymers. The densities of PP1 and PP2 shown in Table 1 are 900 kg/m$^3$.

[Table 1]

(Table 1)

| Symbol | Material | Catalyst | Comonomer | Flexural modulus (MPa) | Melting point (°C) | MFR (g/10 min) |
|---|---|---|---|---|---|---|
| PP1 | Ethylene-propylene random copolymer | Ziegler Natta | Ethylene 3.1 mass% | 980 | 142 | 8 |
| PP2 | Ethylene-propylene random copolymer | Ziegler Natta | Ethylene 1.4 mass% | 1470 | 153 | 7 |
| PP3 | Ethylene- propylene-butene random copolymer | Ziegler Natta | Ethylene 3.1 mass%, butene 3.8 mass% | 650 | 133 | 6 |

<Monomer component amount of polypropylene-based resin>

The monomer component amount of the polypropylene-based resin (specifically, ethylene-propylene copolymer and ethylene-propylene-butene copolymer) was determined by a known method of determination by IR spectrum. Specifically, the monomer component amount was determined by the method described in Polymer Analysis Handbook (Polymer Analysis Research Council, Japan Society for Analytical Chemistry, edition, publication date: January 1995, publishing company: Kinokuniya, page number and item name: 615 to 616 "II. 2.3 2.3.4 Propylene/ethylene copolymer", 618 to 619 "II. 2.3 2.3.5 Propylene/butene copolymer"), that is, the method of quantifying the monomer component amount from the relationship between the value obtained by correcting the absorbance of ethylene and butene with a predetermined coefficient and the thickness of the film-shaped test piece, etc.

More specifically, first, the polypropylene-based resin was hot-pressed in an environment at 180°C to be formed into a film, thereby preparing a plurality of test pieces having different thicknesses. Next, the absorbances at 722 cm$^{-1}$ and 733 cm$^{-1}$ derived from ethylene ($A_{722}$, $A_{733}$) and the absorbance at 766 cm$^{-1}$ derived from butene ($A_{766}$) were read by measuring the IR spectrum of each test piece. Next, for each test piece, the ethylene component amount (unit: mass%) in the polypropylene-based resin was calculated using the following formulas (7) to (9). The value obtained by arithmetically averaging the ethylene component amounts obtained for the test pieces was defined as the ethylene component amount (unit: mass%) in the polypropylene-based resin.

$$(K'_{733})_c = 1/0.96\{(K'_{733})_a - 0.268(K'_{722})_a\} \cdots (7)$$

$$(K'_{722})_c = 1/0.96\{(K'_{722})_a - 0.150(K'_{733})_a\} \cdots (8)$$

$$\text{Ethylene component amount} = 0.575\{(K'_{722})_c + (K'_{733})_c\} \cdots (9)$$

$K'_a$ in the formulas (7) to (9) is an apparent absorption coefficient ($K'_a = A/\rho t$) at each wave number, $K'_c$ is a corrected absorption coefficient, A is absorbance, $\rho$ is a density (unit: g/cm$^3$) of the resin, and t is a thickness (unit: cm) of the film-shaped test piece. The above formulas (7) to (9) can be applied to random copolymers.

Further, for each test piece, the butene component amount (unit: mass%) in the polypropylene-based resin was calculated using the following formula (10). The value obtained by arithmetically averaging the butene component amounts obtained for the test pieces was defined as the butene component amount (unit: mass%) in the polypropylene-based resin.

$$\text{Butene component amount} = 12.3(A_{766}/L) \cdots (10)$$

In the formula (10), A is absorbance, and L is a thickness (unit: mm) of the film-shaped test piece.

<Flexural modulus of polypropylene-based resin>

The polypropylene-based resin was heat-pressed at 230°C to prepare a 4 mm sheet, and a test piece of 80 mm long ×10 mm wide × 4 mm thick was cut out from the sheet. The flexural modulus of this test piece was determined in accordance with JIS K7171:2008. The radius R1 of the indenter and the radius R2 of the support base were both 5 mm, the inter-fulcrum distance was 64 mm, and the test speed was 2 mm/min.

<Melting point of polypropylene-based resin>

The melting point of the polypropylene-based resin was determined based on JIS K7121:1987. Specifically, first, a test piece made of the polypropylene-based resin was conditioned based on "(2) The case of measurement of melting temperature after a definite heat treatment" described in JIS K7121:1987. The test piece after the conditioning was heated from 30°C to 200°C at a heating rate of 10°C/min to obtain a DSC curve. Then, the vertex temperature of the melting peak appearing in the DSC curve was defined as the melting point. As a measuring apparatus, a heat flux differential scanning calorimeter (manufactured by SII NanoTechnology Inc., model number: DSC7020) was used.

<Melt mass flow rate of polypropylene-based resin>

The melt mass flow rate (that is, MFR) of the polypropylene-based resin was measured under the conditions of a temperature of 230°C and a load of 2.16 kg in accordance with JIS K7210-1:2014.

Next, the configuration and production method of the expanded beads used in the present examples will be described.

(Expanded bead A)

As shown in Table 2, an expanded bead A has a multilayer structure including a foamed layer made of PP1 (see Table 1), and a cover layer in a non-foamed state made of PP3 (see Table 1) covering the foamed layer. As illustrated in Figs. 10 and 11, the expanded bead A has a columnar shape in which a cross-sectional shape (that is, the shape of the cut surface of the expanded bead) perpendicular to the axial direction thereof, that is, the direction connecting the bottom surface 11 and the top surface 12 is cross-shaped. The side peripheral surface 13 of the expanded bead A is covered with the cover layer 4, and the inside of the cover layer 4 is composed of the foamed layer 2. On the side peripheral surface 13 of the expanded bead A, four grooves 3 are arranged at equal intervals. The grooves 3 of the expanded bead A each have a V-shaped cross-sectional shape. The expanded bead A has no through-hole.

In preparing the expanded bead A, first, using a coextrusion apparatus including an extruder for forming a core layer, an extruder for forming a cover layer, and a coextrusion die connected to these two extruders, an extrudate extruded from the coextrusion apparatus was cut by a strand cutting method to prepare multilayer resin particles. Specifically, in the extruder for forming a core layer, PP1 as a base resin and zinc borate as a cell adjusting agent were melt-kneaded to obtain a resin melt-kneaded product for forming a core layer. The highest set temperature in the extruder for forming a core layer was set to 245°C, and the blending amount of zinc borate was set to 500 ppm by mass with respect to the mass of the polypropylene-based resin. In parallel with this, in the extruder for forming a cover layer, PP3 as a base resin was melt-kneaded at the highest set temperature of 245°C to obtain a resin melt-kneaded product for forming a cover layer.

These resin melt-kneaded products are co-extruded and joined in the die to form a composite having a core layer in a non-foamed state and a cover layer in a non-foamed state covering a side peripheral surface of the core layer. After this composite was extruded from the die, the extrudate was cooled in water while being taken up, and cut to an appropriate length using a pelletizer, thereby obtaining multilayer resin particles each including a core layer and a cover layer covering the side peripheral surface of the core layer, in which a cross-sectional shape of a cross section perpendicular to an extrusion direction was cross-shaped. The mass ratio between the core layer and the cover layer in the multilayer resin particles was set to core layer : cover layer = 95 : 5 (that is, the mass ratio of the cover layer is 5%). The mass per multilayer resin particle was about 1.5 mg.

Next, the multilayer resin particles were expanded by a direct expansion method to obtain the expanded beads A. Specifically, 1 kg of multilayer resin particles was put into a 5 L sealed container together with 3 L of water as a dispersion medium. Next, 0.3 parts by mass of a dispersant and 0.004 parts by mass of a dispersion aid respectively relative to 100 parts by mass of the multilayer resin particles were added into the sealed container to disperse the multilayer resin particles in the dispersion medium. Kaolin was used as the dispersant. In addition, a surfactant (sodium alkylbenzenesulfonate) was used as the dispersion aid.

Thereafter, carbon dioxide as a blowing agent was added into the sealed container, the sealed container was then sealed, and the inside of the sealed container was heated to the expansion temperature shown in Table 2 while being stirred. The pressure in the container (also referred to as impregnation pressure or carbon dioxide pressure) at this time was as shown in Table 2. After holding the expansion temperature shown in Table 2 for 15 minutes, the contents of the container were released under atmospheric pressure to obtain expanded beads A each including a foamed layer formed by expanding the core layer and the cover layer in a non-foamed state covering the foamed layer. The bulk ratio of the expanded beads A was 36.7 times. A method of measuring the bulk ratio will be described below.

(Expanded bead B)

The method for producing an expanded bead B is the same as the method for producing the expanded bead A except that PP2 was used as the base resin of the core layer, and the expansion temperature and the pressure in the container at the expansion were changed to the values shown in Table 2. The bulk ratio of the expanded beads B was 36.0 times.

(Expanded bead C)

In preparing an expanded bead C, the same resin particles as those used for preparing the expanded bead A were expanded in two steps. Specifically, resin particles were prepared under the same conditions as in the preparation of the expanded beads A. The resin particles were expanded by a direct expansion method under the conditions shown in Table 2 to obtain first-step expanded beads having a bulk ratio of 15.0 times. Thereafter, the first-step expanded beads were dried at 23°C for 24 hours.

Next, the first-step expanded beads after drying were placed in a pressure-resistant container, and the inside of the pressure-resistant container was pressurized with air, so that air was impregnated into the cells to increase the internal pressure in the cells of the expanded beads. The pressure in the cells of the first-step expanded beads taken out from the pressure-resistant container was as shown in Table 2. The first-step expanded beads taken out from the pressure-resistant container were placed in a metal drum, and then steam having a pressure shown in the column of "drum pressure" in Table 2 was supplied into the drum, and the first-step expanded beads were heated under atmospheric pressure. As described above, the first-step expanded beads were further expanded to obtain expanded beads C (second-step expanded beads). The bulk ratio of the expanded beads C was 36.7 times.

(Expanded bead D)

In an expanded bead D, the ratio Ca/A of the average cross-sectional area Ca per groove to the average cross-sectional area A of the expanded bead and the ratio Ct/A of the total cross-sectional area Ct of the grooves to the average cross-sectional area A of the expanded bead are larger than those of the expanded bead A as shown in Table 2. The method for producing the expanded bead D is the same as the method for producing the expanded bead A except that the shape of the die was changed in such a manner that the resin particles have the increased cross-sectional area of the groove, and the expanding conditions were changed as shown in Table 2.

(Expanded bead E)

An expanded bead E has no through-hole and has a cylindrical shape with no groove on the side peripheral surface. In preparing the expanded bead E, first, cylindrical resin particles (see Table 2) each including a core layer made of PP1 and a cover layer made of PP3 were prepared. The resin particles were subjected to the first expanding step under the conditions shown in Table 2 to obtain first-step expanded beads having a bulk ratio of 15.0 times. Then, the first-step expanded beads were subjected to a second expanding step under the conditions shown in Table 2 to further expand the first-step expanded beads to thereby obtain expanded beads E (second-step expanded beads). The bulk ratio of the expanded beads E was 35.7 times.

(Expanded bead F)

An expanded bead F has a cylindrical shape having no groove on the side peripheral surface and having a through hole along the central axis. The cross-sectional shape of the through-hole in the cross section perpendicular to the axial direction of the expanded bead F is approximately circular, and the average hole diameter thereof is 1.55 mm. In preparing the expanded beads F, first, cylindrical resin particles (see Table 2) each including a core layer made of PP1 and a cover layer made of PP3 were prepared. The resin particles were expanded under the conditions shown in Table 2. The bulk ratio of the expanded beads F was 36.2 times.

(Expanded bead G)

The method for producing an expanded bead G is the same as the method for producing the expanded bead F except that resin particles were prepared using PP2 as the base resin of the core layer, and the resin particles were expanded under the conditions shown in Table 2. The bulk ratio of the expanded beads G was 36.0 times.

(Expanded bead H)

An expanded bead H each have a columnar shape having no through-hole. A cross section perpendicular to the axial direction of the expanded bead H is cross-shaped. In the expanded bead H, the ratio LID of the average length L of the expanded bead in the axial direction to the average outer diameter D of the expanded bead is larger than that of the expanded bead A as shown in Table 2. The method for producing the expanded bead H is the same as the method for producing the expanded bead A except that the resin particles are cut in such a manner that the ratio LID of the resin particles was made larger, and the expanding conditions were changed as shown in Table 2.

Next, molded articles were prepared by the following method using the above-mentioned expanded beads A to H.

(Examples 101 to 103, 105, 205 to 206, 301 to 303, and 307)

First, the expanded beads shown in Tables 3 to 5 were dried at 23°C for 24 hours, and then impregnated with air to increase the internal pressure, that is, the pressure in cells to the value shown in the column of "Particle internal pressure" in Tables 3 to 5. The internal pressure of the expanded beads is a value measured as follows. A mass Q (unit: g) of the expanded beads, in a state where the internal pressure was increased immediately before filling into the mold and a mass U (unit: g) of the expanded beads after a lapse of 48 hours were measured, and the difference between Q and U was defined as an increased air amount W (unit: g). Using these values, the internal pressure (unit: MPa (G)) of the expanded beads was calculated based on the following formula (11).

$$P = (W/M) \times R \times T/V \cdots (11)$$

In the formula (11), M is a molecular weight of air, R is a gas constant, T is an absolute temperature, and V is a volume (unit: L) obtained by subtracting a volume of the base resin in the expanded beads from an apparent volume of the expanded beads. In the present example, M was set to 28.8 (g/mol), R was set to 0.0083 (MPa·L/(K·mol)), and T was set to 296 (K).

Next, the expanded beads were filled in a mold for molding a flat plate of 300 mm long × 250 mm wide × 60 mm thick by a cracking filling method. The cracking amount at the filling, that is, the ratio of the die opening amount of the mold to the inner dimension in the thickness direction was set to the values shown in Tables 3 to 5, and after filling was completed, the mold was clamped in the thickness direction to mechanically compress the expanded beads.

In the present example, the filling rate of the expanded beads filled in the mold was as shown in Tables 3 to 5. The filling rate (unit: %) of the expanded beads is represented by the following formula (5) using a mass a (unit: kg) of the expanded beads filled in the mold, a bulk density b (unit: kg/m³) of the expanded beads, and an internal volume c (unit: m³) of the mold.

$$\text{Filling rate} = [\{a/(b \times c)\}\text{-}1] \times 100 \cdots (5)$$

After the mold was clamped, an exhaust step of supplying steam from both surfaces of the mold for 5 seconds to perform preheating was performed. Thereafter, steam was supplied from one surface side of the mold to perform one-side heating until the pressure reached a pressure 0.08 MPa (G) lower than the molding pressure at main heating shown in Tables 3 to 5. Next, steam was supplied from the other surface side of the mold to perform one-side heating until the pressure reached a pressure 0.04 MPa (G) lower than the molding pressure at the main heating. Thereafter, steam was supplied from both surfaces of the mold to perform the main heating until the molding pressure shown in Tables 3 to 5 was reached. After completion of the main heating, the pressure in the mold was released, and the molded article was cooled in the mold until the surface pressure due to the expanding force of the molded article reached 0.04 MPa (G). Thereafter, the molded article was taken out from the mold.

(Example 104)

The method for producing a molded article of Example 104 is the same as the method for producing the molded article of Example 101 except that no internal pressure was applied to the expanded beads A and the cracking amount was changed to the value shown in Table 3.

(Examples 106 and 304)

The method for producing molded articles of Example 106 and Example 304 is the same as the method for producing the molded article of Example 101 except that expanded beads shown in each of Tables 3 and 5 were filled in a mold by a compression filling method instead of the cracking filling method, and the filling rate of the expanded beads in the mold and the molding pressure were changed to the values shown in Tables 3 and 5. The procedure of filling the expanded beads by the compression filling method is specifically as follows. First, the expanded beads to which the internal pressure was applied were put into a filling hopper. Thereafter, using compressed air as a pressurized gas, the inside of the filling hopper, the inside of the mold, and the inside of a transfer path connecting the two were pressurized to compress the expanded beads in the filling hopper. Thereafter, the expanded beads compressed in the filling hopper were supplied into the mold through the transfer path while maintaining the compressed state, and the expanded beads were filled in the mold. In the present examples, the expanded beads were filled in a state where the mold was closed, and thus, "-" was displayed in the columns of the cracking amount in Tables 3 and 5.

Various properties of the expanded beads and the molded article used in each example are shown in Tables 2 to 5. Evaluation methods of various properties shown in Tables 2 to 5 are as follows.

(Evaluation of expanded beads)

For the measurement and evaluation of the physical properties of the expanded beads, the expanded beads after being left to stand for 24 hours under the conditions of a relative humidity of 50%, 23°C, and 1 atm to be conditioned were used.

< Ratio LID of average length L to average outer diameter D >

First, maximum axial lengths of 100 expanded beads randomly selected from the expanded beads after conditioning were measured using a caliper, and the arithmetic average value thereof was defined as the average length L (unit: mm) of the expanded bead in the axial direction. Each of these expanded beads was cut at the center in the axial direction thereof along a plane perpendicular to the axial direction to expose a cut surface of the expanded bead as exemplified in Fig. 11. Next, a photograph of the cut surface of each of the expanded beads was taken, and image analysis was performed to measure the outer diameter d of each expanded bead. Specifically, two points P3 and P4 were set on the contour of the expanded bead in the cut surface in such a manner that the distance between the two points was the longest, and the distance between these two points was defined as the outer diameter d of each expanded bead in the cut surface. Then, the arithmetic average value of the outer diameters d of the 100 expanded beads was defined as the average outer diameter D (unit: mm) of the expanded bead in the cut surface. Table 2 shows the average outer diameter D of the expanded bead obtained as described above, the average length L of the expanded beads, and the ratio L/D of the both.

<Bulk ratio and bulk density>

The expanded beads after the conditioning were filled in a measuring cylinder so as to be naturally deposited, and the bulk volume (unit: L) of the expanded beads was read from the scale of the measuring cylinder. Then, the mass (unit: g) of the expanded beads in the measuring cylinder was divided by the above-described bulk volume and the resulting value was subjected to unit conversion, thereby calculating the bulk density (unit: $kg/m^3$) of the expanded beads. The bulk ratio of the expanded beads was calculated by dividing the density (unit: $kg/m^3$) of the polypropylene-based resin constituting the foamed layer by the bulk density (unit: $kg/m^3$) of the expanded beads.

<Apparent density>

The mass of the expanded beads after conditioning was measured, and then the expanded beads were immersed in ethanol having a temperature of 23°C contained in a measuring cylinder with a wire mesh. In consideration of the volume of the wire mesh, the volume of the expanded beads read from the increase in liquid level was measured. The mass (unit: g) of the expanded beads thus obtained was divided by the volume (unit: L) and the resulting value was subjected to unit conversion, thereby calculating the apparent density (unit: $kg/m^3$) of the expanded beads. The ratio of the apparent density to the bulk density obtained by the above-described method is shown in the column "Apparent density/bulk density" in Table 2.

<Closed cell content>

The closed cell content of the expanded beads was measured using an air comparison pycnometer based on ASTM-D6226-10. Specifically, the closed cell content was determined as follows. Using expanded beads having a bulk volume of about 20 $cm^3$ after conditioning as a measurement sample, the apparent volume Va was accurately measured by an ethanol immersion method. After the measurement sample whose apparent volume Va had been measured was sufficiently dried, the true volume value Vx of the measurement sample was measured by AccuPic II1340 manufactured by Shimadzu Corporation in accordance with the procedure described in ASTM-D6226-10. In the measurement of the true volume Vx, the pressure applied in the purging step and the testing step was set to 5 kPa. In addition, in procedures 9.13 and 9.14, the pressure was recorded after waiting until the change rate of pressure became 0.100 kPa/min or less. Then, using these volume values Va and Vx, the closed cell content (unit: %) of the measurement sample was calculated based on the following formula (6).

$$\text{Closed cell content} = (Vx-W/\rho) \times 100/(Va-W/\rho) \cdots (6)$$

The above operation was performed five times using different measurement samples, and the arithmetic average value of the closed cell contents obtained by these five measurements was defined as the closed cell content of the expanded beads.

It is to be noted that the meanings of the symbols in the above formula (6) are as follows.

Vx: the true volume of the measurement sample measured by the above method, that is, the sum of the volume of the resin constituting the expanded beads and the total volume of the closed cell portions in the expanded beads (unit: $cm^3$)

Va: the apparent volume (unit: $cm^3$) of the measurement sample measured from the increase in liquid level when the measurement sample was immersed in ethanol contained in a measuring cylinder

W: the mass of the measurement sample (unit: g)

$\rho$: the density of the resin constituting expanded beads (unit: $g/cm^3$)

<Heat of high-temperature peak of expanded beads>

A DSC curve was obtained by performing differential scanning calorimetry in accordance with JIS K7121:1987 using one expanded bead after conditioning. The measurement start temperature in DSC was set to 23°C, the measurement end temperature was set to 200°C, and the heating rate was set to 10°C/min. As a measuring apparatus, "DSC.Q1000" manufactured by TA Instruments was used. The area of the high-temperature peak in the DSC curve obtained by the above-described method was calculated. The above measurement was performed on five expanded beads, and the arithmetic average value of the obtained areas of the high-temperature peaks was defined as the heat of high-temperature peak.

<Average cross-sectional area A of expanded bead in cut surface>

100 expanded beads were randomly selected from the expanded beads after conditioning, and each of these expanded beads was cut at the central position in the axial direction thereof along a plane perpendicular to the axial direction to expose the cut surface of the expanded bead. Next, a photograph of the cut surface of each of the expanded beads was taken, and image analysis was performed to measure the cross-sectional area of each expanded bead. Then, the arithmetic average value of these was defined as the average cross-sectional area A of the expanded bead.

<Area B of virtual true circle having average outer diameter D>

Using the average outer diameter D of the expanded bead in the cut surface obtained by the method described above, the area B of the virtual perfect circle having the average outer diameter D was calculated based on the following formula (12). In addition, the value of the ratio A/B of the average cross-sectional area A of the expanded bead in the cut surface to the area B of the virtual perfect circle having the average outer diameter D is described in Table 2.

$$B = \pi D^2/4 \cdots (12)$$

<Total cross-sectional area Ct of grooves, average cross-sectional area Ca per groove>

100 expanded beads were randomly selected from the expanded beads after conditioning, and each of these expanded beads was cut at the central position in the axial direction thereof along a plane perpendicular to the axial direction to expose the cut surface of the expanded bead. Next, a photograph of the cut surface of each of the expanded beads was taken, and image analysis was performed to measure the cross-sectional area C of each of the grooves in the expanded bead. Specifically, as exemplified in Fig. 11, a tangent line L1 that was in contact with the contour of the expanded bead at two points P1 and P2, and that does not pass through the inside of the expanded bead was drawn in the outside of each groove 3. The area of the region surrounded by the contour of the expanded bead and the tangent line L1 (that is, the area of the shaded portion in Fig. 11) was calculated, and this area was defined as the cross-sectional area C of each groove 3. Then, the total of the cross-sectional areas C of the grooves 3 was calculated for each expanded bead. The total of the cross-sectional areas C of the grooves 3 thus obtained was divided by the number of grooves 3 formed in the expanded bead to calculate the cross-sectional area per groove.

The above operation was performed on 100 expanded beads, the arithmetic average value of the obtained totals of the cross-sectional areas of the grooves was defined as the total cross-sectional area Ct of the grooves, and the average value of the cross-sectional area per groove was defined as the average cross-sectional area Ca per groove. In addition, Table 2 describes the ratio Ct/A of the total cross-sectional area Ct of the grooves to the average cross-sectional area A of the expanded bead in the cut surface and the ratio Ca/A of the average cross-sectional area Ca per groove to the average cross-sectional area A of the expanded bead.

<Average depth H of grooves>

100 expanded beads were randomly selected from the expanded beads after conditioning, and each of these expanded beads was cut at the central position in the axial direction thereof along a plane perpendicular to the axial direction to expose the cut surface of the expanded bead. Next, a photograph of the cut surface of each of the expanded beads was taken, and image analysis was performed to measure the depth h of each of the grooves in the expanded beads. Specifically, as exemplified in Fig. 11, a tangent line L1 that was in contact with the contour of the expanded bead at two points P1 and P2, and that does not pass through the inside of the expanded bead was drawn in the outside of each groove 3. The maximum value of the distance from the tangent line L1 to the peripheral edge (that is, the contour of the expanded bead) of the groove 3 in the direction perpendicular to the tangent line L1 was defined as the depth h of each groove. Then, the maximum value h of the distance was measured for all the grooves 3, and the arithmetic average value of the depth h of these grooves was defined as the average depth H of the grooves of the expanded beads. In addition, Table 2 describes the ratio H/D of the average depth H of the grooves to the average outer diameter D of the expanded bead in the cut surface.

(Evaluation of molded article)

For the measurement and evaluation of the physical properties of the molded article, a molded article without being subjected to the aging step after being released from the mold was used. Specifically, in the method for producing a molded article described above, the molded article after demolding was left to stand for 12 hours under conditions of a relative humidity of 50%, 23°C, and 1 atm to be conditioned, and then used.

<Density of molded article>

The density (unit: kg/m$^3$) of the molded article was calculated by dividing the mass (unit: g) of the molded article by the volume (unit: L) obtained from the outer dimension of the molded article and then performing unit conversion.

<Closed cell content>

The closed cell content of the molded article was measured in accordance with ASTM-D6226-10. Specifically, first, a test body of 25 mm long × 25 mm wide × 25 mm high was cut out from the central portion of the molded article, and a geometric volume Va (unit: cm$^3$) of the test body, that is, a product of a vertical dimension (unit: cm), a horizontal dimension (unit: cm), and a height dimension (unit: cm) was calculated. Next, in accordance with the procedure described in ASTM-D6226-10, a true volume Vx of the test body was measured by an air-comparison pycnometer (specifically, AccuPic II1340 manufactured by Shimadzu Corporation). At this time, the pressure applied in the purging step and the testing step was set to 5 kPa. In addition, in procedures 9.13 and 9.14, the pressure was recorded after waiting until the change rate of pressure became 0.100 kPa/min or less. The closed cell content (unit: %) of the test body was calculated by the following formula (4) using the geometric volume Va and the true volume Vx of the test body obtained above, a mass W (unit: g) of the test body, and a density $\rho$ (unit: g/cm$^3$) of the resin constituting the expanded beads.

$$\text{Closed cell content} = (Vx - W/\rho) \times 100/(Va - W/\rho) \cdots (4)$$

The above operation was performed on five test bodies, and the closed cell content of each test body was calculated. An arithmetic average value of the closed cell contents of the five test bodies was defined as the closed cell content of the molded article.

<Open cell content>

In accordance with ASTM-D6226-10, the open cell content Co was measured by correcting the influence of closed cells broken at the cutting out of a measurement sample according to Procedure 2 described in Supplement X1.3 of the same standard. Specifically, first, the molded article was conditioned by allowing the molded article to stand at a temperature of 23°C for 12 hours. Next, a cubic first test piece of 2.5 cm long $\times$ 2.5 cm wide $\times$ 2.5 cm high was cut out from the central portion of the molded article, and its geometric volume Va (unit: $cm^3$), that is, a product of a vertical dimension (unit: cm), a horizontal dimension (unit: cm), and a height dimension (unit: cm) was calculated. Next, a true volume V1 (unit: $cm^3$) of the first test piece was measured using a dry automatic densitometer (specifically, AccuPic II 1340 manufactured by Shimadzu Corporation). At this time, the pressure applied in the purging step and the testing step was set to 5 kPa. In addition, in procedures 9.13 and 9.14, the pressure was recorded after waiting until the change rate of pressure became 0.100 kPa/min or less.

Thereafter, the first test piece was divided into 8 equal parts to prepare cubic second test pieces each having a size of 1.25 cm long $\times$ 1.25 cm wide $\times$ 1.25 cm high. Then, a true volume (unit: $cm^3$) of each of the second test pieces was measured by the same method as the method for measuring the true volume V1 of the first test piece. Thereafter, the true volumes of the individual second test pieces were summed to obtain a true volume V2 of the second test pieces. Using the geometric volume Va of the first test piece, the true volume V1 of the first test piece, and the true volume V2 (unit: $cm^3$) of the second test pieces, which were thus obtained, the open cell content (unit: %) of the first test piece was calculated based on the following formula (1).

$$\text{Open cell content} = (\text{Va-2V1+V2}) \times 100/\text{Va} \cdots (1)$$

The above operation was performed on five first test pieces, and the open cell content of each first test piece was calculated. An arithmetic average value of the open cell contents of the five first test pieces was defined as an open cell content Co of the molded article.

<Voidage of molded article>

A test piece having a rectangular parallelepiped shape of 20 mm long $\times$ 100 mm wide $\times$ 20 mm high was cut out from the central portion of the molded article. The test piece was immersed in ethanol contained in a measuring cylinder, and a true volume Vc (unit: L) of the test piece was determined from the increase in the liquid level of ethanol. In addition, an apparent volume Vd (unit: L) was determined from the outer dimension of the test piece. The voidage (unit: %) of the molded article was calculated based on the following formula (3) using the true volume Vc and the apparent volume Vd of the test piece obtained as described above.

$$\text{Voidage} = [(\text{Vd-Vc})/\text{Vd}] \times 100 \cdots (3)$$

<Number of expanded beads per unit area in surface of molded article>

Five square evaluation regions each having a side of 100 mm were set at equal intervals in a portion of the surface of the molded article excluding an end portion. Then, the number of expanded beads present in each evaluation region was counted. At this time, it was assumed that the expanded beads present on the boundary line of the evaluation region were also present in the evaluation region. The number of expanded beads per unit area (that is, 1 $cm^2$) in each evaluation region was calculated by dividing the number of expanded beads in an evaluation region thus obtained by the area of the evaluation region. Then, the number of expanded beads per unit area in the surface of the molded article was calculated by arithmetically averaging the numbers of expanded beads per unit area (that is, 1 $cm^2$) obtained in the plurality of evaluation regions.

<50% Compression stress $\sigma_{50}$>

A test piece having a prismatic shape of 50 mm long $\times$ 50 mm wide $\times$ 25 mm thick and not including a skin surface, that is, a surface in contact with the inner surface of the mold during in-mold molding was cut out from the central portion of the molded article. Based on JIS K6767:1999, the 50% compression stress $\sigma_{50}$ (unit: kPa) of the molded article was determined by performing a compression test at a compression rate of 10 mm/min. In addition, in Tables 3 to 5, the value ($\sigma_{50}$/density of molded article) obtained by dividing the 50% compression stress $\sigma_{50}$ of the molded article by the density of the molded article is described.

<Surface property (appearance)>

The surface of the molded article was visually observed, and the surface property of the molded article was evaluated based on the following criteria.

A: A good surface state is shown in which there are few bead gaps on the surface of the molded article and irregularities caused by grooves, through-holes, and the like are not noticeable.
B: On the surface of the molded article, bead gaps and/or irregularities due to grooves, through-holes, and the like are slightly observed.
C: On the surface of the molded article, bead gaps and/or irregularities due to grooves, through-holes, and the like are observed relatively frequently.
D: On the surface of the molded article, bead gaps and/or irregularities due to grooves, through-holes, and the like are remarkably observed.

<Recoverability>

In a plan view of the molded article viewed from the thickness direction, the thickness of the molded article at each of four positions 10 mm inward from vertices in the center direction and the thickness of the molded article at the central portion were measured. Next, the ratio (unit: %) of the thickness of the thinnest portion to the thickness of the thickest portion among the measured portions was calculated. In the column of "Recoverability" of each of Tables 3 to 5, when the thickness ratio was 95% or more, it was described as "Good", and when the thickness ratio was less than 95%, it was described as "Poor".

<Water leak prevention test>

A box-shaped molded article having an outer dimension of 200 mm long, 150 mm wide, and 50 mm high, an inner dimension of 180 mm long, 130 mm wide, and 40 mm high, and a side wall and a bottom wall having a thickness of 10 mm was produced by a method similar to the method for producing a molded article described above. 0.9 L of water was put into the box-shaped molded article, and the molded article was allowed to stand for 24 hours under an environment of 23°C, 50%RH, and 1 atm. In the column of "Water Leak Prevention Test" of each of Tables 3 to 5, when water leakage from the molded article was not observed, it was described as "Good", and when water leakage was observed, it was described as "Poor".

<Water permeability coefficient>

The water permeability coefficient of the molded article was measured by performing a constant water level water permeability test according to JIS A1218 using a molded article of expanded beads as a test body. Specifically, from the molded article, two cylinders having a bottom surface with a circle diameter of 105 mm and a height of 50 mm were cut out, and these were stacked to prepare a test piece for the constant water level permeability test. The shape of the test piece was a cylindrical shape in which the diameter of the circle of the bottom surface was 105 mm and the height was 100 mm. In the column of "Water permeability coefficient" of each of Tables 3 to 5, a symbol "N" was described when the water permeability coefficient was 0 cm/sec or more and less than 0.001 cm/sec, a symbol "M" was described when the water permeability coefficient was 0.001 cm/sec or more and less than 0.008 cm/sec, and a symbol "P" was described when the water permeability coefficient was 0.008 cm/sec or more.

[Table 2]

(Table 2)

| | | Unit | Expanded bead A | Expanded bead B | Expanded bead C | Expanded bead D | Expanded bead E | Expanded bead F | Expanded bead G | Expanded bead H |
|---|---|---|---|---|---|---|---|---|---|---|
| Resin particles | Core layer | - | PP1 | PP2 | PP1 | PP1 | PP1 | PP1 | PP2 | PP1 |
| | Cover layer | - | PP3 | PP3 | PP3 | PP3 | PP3 | PP3 | PP3 | PP3 |
| First expanding step | Expansion temperature | °C | 148.2 | 157.2 | 150.1 | 148.7 | 150.1 | 146.4 | 158.1 | 148.7 |
| | Pressure inside container | MPa (G) | 3.9 | 3.8 | 2.6 | 3.2 | 2.6 | 3.5 | 3.1 | 3.2 |
| | Bulk ratio | Times | 36.7 | 36.0 | 15.0 | 36.7 | 15.0 | 36.2 | 36.0 | 36.7 |
| Second expanding step | Pressure in cell | MPa (G) | - | - | 0.5 | - | 0.5 | - | - | - |
| | Drum pressure | MPa (G) | - | - | 0.07 | - | 0.065 | - | - | - |
| | Cross-sectional shape | - | Cross-shaped | C ross-shaped | Cross-shaped | C ross-shaped | Circular | Annular | Annular | Cross-shaped |
| | Number of grooves | - | 4 | 4 | 4 | 4 | 0 | 0 | 0 | 4 |
| | Presence or absence of through-hole | - | Absence | Absence | Absence | Absence | Absence | Presence | Presence | Absence |
| | Average outer diameter D | mm | 4.1 | 4.0 | 4.1 | 4.8 | 3.4 | 3.8 | 3.7 | 3.6 |
| | L/D | - | 1.1 | 1.1 | 1.1 | 0.7 | 1.0 | 1.1 | 1.2 | 1.6 |
| | Bulk ratio | Times | 36.7 | 36.0 | 36.7 | 36.7 | 35.7 | 36.2 | 36.0 | 36.7 |
| | Bulk density | kg/m$^3$ | 24.5 | 25.0 | 24.5 | 24.5 | 25.2 | 24.9 | 25.0 | 24.5 |
| | Apparent density | kg/m$^3$ | 44.0 | 44.5 | 42.0 | 57.0 | 40.0 | 51.1 | 51.3 | 55.0 |
| | Apparent density/bulk density | - | 1.79 | 1.78 | 1.71 | 2.32 | 1.59 | 2.06 | 2.05 | 2.24 |
| | Closed cell content | % | 98 | 98 | 97 | 97 | 98 | 97 | 96 | 98 |
| | Heat of high-temperature peak | J/g | 14 | 15 | 14 | 15 | 14 | 15 | 16 | 14 |

EP 4 480 998 A1

30

| | | Unit | Expanded bead A | Expanded bead B | Expanded bead C | Expanded bead D | Expanded bead E | Expanded bead F | Expanded bead G | Expanded bead H |
|---|---|---|---|---|---|---|---|---|---|---|
| Expanded beads | Average cross-sectional area A of expanded bead | $mm^2$ | 9.2 | 9.0 | 10.0 | 9.1 | 10.2 | 8.1 | 8.3 | 9.2 |
| | Area B of virtual circle | $mm^2$ | 13.0 | 12.5 | 13.1 | 20.9 | 11.6 | 10.4 | 10.2 | 10.2 |
| | A/B | - | 0.71 | 0.72 | 0.76 | 0.43 | 0.89 | 0.78 | 0.81 | 0.90 |
| | Average cross-sectional area Ca per groove | $mm^2$ | 0.4 | 0.4 | 0.4 | 1.5 | - | - | - | 0.3 |
| | Total cross-sectional area Ct of grooves | $mm^2$ | 1.5 | 1.4 | 1.5 | 6.2 | - | - | - | 1.3 |
| | Ca/A | - | 0.04 | 0.04 | 0.04 | 0.17 | - | - | - | 0.04 |
| | Ct/A | - | 0.16 | 0.16 | 0.15 | 0.68 | - | - | - | 0.14 |
| | Average depth H of grooves | mm | 0.45 | 0.42 | 0.44 | 1.15 | - | - | - | 0.41 |
| | H/D | - | 0.11 | 0.11 | 0.11 | 0.24 | - | - | - | 0.11 |

[Table 3]

[Table 3]

(Table 3)

| | | Unit | Example 101 | Example 102 | Example 103 | Example 104 | Example 105 | Example 106 |
|---|---|---|---|---|---|---|---|---|
| Expanded beads | | - | Expanded bead A | Expanded bead B | Expanded bead C | Expanded bead A | Expanded bead A | Expanded bead D |
| Molding conditions | Filling method | - | Cracking | Cracking | Cracking | Cracking | Cracking | Compression |
| | Cracking amount | % | 10 | 10 | 10 | 20 | 10 | - |
| | Particle internal pressure | MPa (G) | 0.10 | 0.10 | 0.10 | 0 | 0.03 | 0.10 |
| | Molding pressure | MPa (G) | 0.22 | 0.26 | 0.22 | 0.24 | 0.24 | 0.24 |
| | Water cooling time | s | 58 | 0 | 65 | 25 | 26 | 10 |
| | Filling rate | % | 12.5 | 11.5 | 12.9 | 23.7 | 12.4 | 49.5 |
| Molded article | Density of molded article | kg/m$^3$ | 27.2 | 27.5 | 28.2 | 30.1 | 28.5 | 37.2 |
| | Closed cell content | % | 93 | 93 | 94 | 92 | 93 | 95 |
| | Open cell content Co | % | 4.5 | 4.6 | 2.0 | 6.0 | 4.6 | 7.0 |
| | Voidage | % | 7.4 | 7.5 | 6.1 | 10.0 | 5.4 | 11.5 |
| | Number of expanded beads in surface | beads/cm$^2$ | 5 | 6 | 5 | 5 | 6 | 5 |
| | 50% Compression stress $\sigma_{50}$ | kPa | 213 | 235 | 224 | 230 | 235 | 270 |
| | $\sigma_{50}$/density of molded article | kPa/(kg/m$^3$) | 7.8 | 8.5 | 7.9 | 7.6 | 8.2 | 7.3 |
| | Surface property (appearance) | - | A | A | A | A | A | A |
| | Recoverability | - | Good | Good | Good | Good | Good | Good |
| | Water leak prevention test | - | Good | Good | Good | Good | Good | Good |
| | Water permeability coefficient | - | M | M | M | M | M | M |

[Table 4]

(Table 4)

| | | Unit | Example 205 | Example 206 |
|---|---|---|---|---|
| Expanded beads | | - | Expanded bead D | Expanded bead H |
| Molding conditions | Filling method | - | Cracking | Cracking |
| | Cracking amount | % | 10 | 10 |
| | Particle internal pressure | MPa (G) | 0.10 | 0.10 |
| | Molding pressure | MPa (G) | 0.22 | 0.22 |
| | Water cooling time | s | 0 | 0 |
| | Filling rate | % | 13.1 | 5.6 |
| Molded article | Density of molded article | kg/m$^3$ | 29.5 | 26.5 |
| | Closed cell content | % | 97 | 98 |
| | Open cell content Co | % | 7.8 | 10.2 |
| | Voidage | % | 10.2 | 14.5 |
| | Number of expanded beads in surface | beads/cm$^2$ | 4 | 4 |
| | 50% Compression stress $\sigma_{50}$ | kPa | 218 | 180 |
| | $\sigma_{50}$/density of molded article | kPa/(kg/m$^3$) | 7.4 | 6.8 |
| | Surface property (appearance) | - | C | B |
| | Recoverability | - | Good | Good |
| | Water leak prevention test | - | Poor | Poor |
| | Water permeability coefficient | - | P | P |

[Table 5]

(Table 5)

| | | Unit | Example 301 | Example 302 | Example 303 | Example 304 | Example 307 |
|---|---|---|---|---|---|---|---|
| Expanded beads | | - | Expanded bead E | Expanded bead F | Expanded bead G | Expanded bead F | Expanded bead A |
| Molding conditions | Filling method | - | Cracking | Cracking | Cracking | Compression | Cracking |
| | Cracking amount | % | 10 | 10 | 10 | - | 20 |
| | Particle internal pressure | MPa (G) | 0.10 | 0.10 | 0.10 | 0.20 | 0.20 |
| | Molding pressure | MPa (G) | 0.28 | 0.18 | 0.20 | 0.20 | 0.26 |
| | Water cooling time | s | 100 | 0 | 0 | 25 | 46 |
| | Filling rate | % | 11.1 | 12.5 | 12.0 | 35.6 | 24.1 |
| | Density of molded article | kg/m$^3$ | 29.8 | 30.1 | 30.1 | 58.3 | 31.2 |

(continued)

| | | Unit | Example 301 | Example 302 | Example 303 | Example 304 | Example 307 |
|---|---|---|---|---|---|---|---|
| Expanded beads | | - | Expanded bead E | Expanded bead F | Expanded bead G | Expanded bead F | Expanded bead A |
| Molded article | Closed cell content | % | 98 | 97 | 96 | 98 | 95 |
| | Open cell content Co | % | 0.4 | 14.2 | 15.2 | 1.9 | 1.1 |
| | Voidage | % | 5.4 | 18.0 | 19.5 | 7.0 | 4.3 |
| | Number of expanded beads in surface | beads/cm$^2$ | 7 | 6 | 6 | 6 | 5 |
| | 50% Compression stress $\sigma_{50}$ | kPa | 234 | 176 | 251 | 470 | 250 |
| | $\sigma_{50}$/density of molded article | kPa/(kg/m$^3$) | 7.9 | 5.8 | 8.3 | 8.1 | 8.0 |
| | Surface property (appearance) | - | A | D | D | A | A |
| | Recoverability | - | Poor | Good | Good | Poor | Poor |
| | Water leak prevention test | - | Good | Poor | Poor | Good | Good |
| | Water permeability coefficient | - | N | P | P | N | N |

As shown in Table 2, the expanded beads A to D and the expanded beads H used in Examples 101 to 106 and 205 to 206 each have a columnar shape having no through-hole, and have four grooves on the side peripheral surface thereof. The bulk ratio, closed cell content, ratio Ca/A, ratio Ct/A, average outer diameter D, and ratio L/D of these expanded beads are within the above specific ranges. In Examples 101 to 106 and 205 to 206, molded articles were produced using these expanded beads in such a manner that the open cell content was within a predetermined range. Accordingly, even when the aging step is omitted, the obtained molded articles could curtail significant shrinkage and deformation, and the appearance and rigidity thereof were not excessively deteriorated. Among them, the molded articles obtained in Example 101 to 106 were particularly excellent in appearance and rigidity.

On the other hand, the expanded beads E used in Example 301 are conventional polypropylene-based resin expanded beads each having a cylindrical shape as shown in Table 2 and having no groove on the side peripheral surface thereof. Such expanded beads are less likely to form a steam passage during in-mold molding. In addition, an open cell structure is hardly formed in the obtained molded article. Thus, as shown in Table 5, the molded article of Example 301 was significantly shrunk and deformed, and the recoverability failed when the aging step was not performed after the molded article was released from the mold.

The expanded beads F used in Example 302 and the expanded beads G used in Example 303 each have a cylindrical shape having a through-hole. As shown in Table 5, when such expanded beads were subjected to in-mold molding, an open cell structure derived from a through-hole was formed, and as a result, the open cell content of the molded article was excessively increased. Accordingly, the appearance of the molded article significantly deteriorated, and the rigidity was also reduced. In addition, the molded articles of these examples could not pass the water leak prevention test.

Example 304 is an example in which the particle internal pressure was further increased and the filling rate of the expanded beads F into the mold was further increased in order to reduce the open cell content of the molded article of Example 302. As shown in Table 5, in Example 304, the open cell content of the molded article was excessively reduced, and the molded article was significantly shrunk and deformed when the molded article released from the mold was not subjected to the aging step, and ranked as failed in the recoverability.

Example 307 is an example in which the same expanded beads A as in Example 101 were used, and molding conditions were changed to produce a molded article. In Example 307, the open cell content of the resulting molded article was excessively small, and the molded article was significantly shrunk and deformed when the molded article released from the mold was not subjected to the aging step, failing the recoverability.

Although specific aspects of the crystalline thermoplastic resin expanded bead, the molded article of crystalline thermoplastic resin expanded beads, and the method for producing the same according to the present invention have been described above based on Examples, specific aspects of the crystalline thermoplastic resin expanded bead and the like according to the present invention are not limited to the aspects of Examples, and the configuration can be appropriately changed without impairing the gist of the present invention.

**Claims**

1. A molded article of crystalline thermoplastic resin expanded beads formed by mutual fusion-bonding of crystalline thermoplastic resin expanded beads each having a columnar shape without a through-hole, the molded article having a molded article ratio of 15 times or more and 90 times or less, wherein

   a closed cell content of the molded article is 90% or more, and
   an open cell content of the molded article is 2% or more and 12% or less.

2. The molded article of crystalline thermoplastic resin expanded beads according to claim 1, wherein the open cell content of the molded article is 7.5% or less.

3. The molded article of crystalline thermoplastic resin expanded beads according to claim 1 or 2, wherein a number of the expanded beads per unit area in a surface of the molded article is 3 beads/cm$^2$ or more and 30 beads/cm$^2$ or less.

4. A crystalline thermoplastic resin expanded bead for in-mold molding, comprising a foamed layer including a crystalline thermoplastic resin as a base resin, and having a bulk ratio of 15 times or more and 90 times or less, wherein

   the expanded bead has a columnar shape without a through-hole and has at least one groove on a side peripheral surface thereof,
   in a cut surface obtained by cutting the expanded bead at a center in an axial direction of the expanded bead along a plane perpendicular to the axial direction, a ratio Ca/A of an average cross-sectional area Ca per groove to an average cross-sectional area A of the expanded bead is 0.01 or more and 0.25 or less, a ratio Ct/A of a total cross-sectional area Ct of the groove(s) to the average cross-sectional area A of the expanded bead is 0.02 or more and 0.75 or less, and an average outer diameter D of the expanded bead is 0.5 mm or more and 10 mm or less, and a ratio LID of an average length L of the expanded bead in the axial direction to the average outer diameter D of the expanded bead is 0.5 or more and 2.0 or less.

5. The crystalline thermoplastic resin expanded bead according to claim 4,

   wherein the expanded bead has a closed cell content of 90% or more,
   wherein in the cut surface obtained by cutting the expanded bead at the center in the axial direction along the plane perpendicular to the axial direction, the ratio Ca/A of the average cross-sectional area Ca per groove to the average cross-sectional area A of the expanded bead is 0.01 or more and 0.20 or less, the ratio Ct/A of the total cross-sectional area Ct of the groove(s) to the average cross-sectional area A of the expanded bead is 0.02 or more and 0.20 or less, and
   wherein the ratio L/D of the average length L of the expanded bead in the axial direction to the average outer diameter D of the expanded bead is 0.5 or more and 1.5 or less.

6. The crystalline thermoplastic resin expanded bead according to claim 4 or 5, wherein the average cross-sectional area Ca per groove in the cut surface of the expanded bead is 0.05 mm$^2$ or more and 1.2 mm$^2$ or less.

7. The crystalline thermoplastic resin expanded bead according to any one of claims 4 to 6, wherein a ratio H/D of an average depth H per groove to the average outer diameter D of the expanded bead in the cut surface of the expanded bead is 0.20 or less.

8. The crystalline thermoplastic resin expanded bead according to any one of claims 4 to 7, wherein a ratio A/B of an average cross-sectional area A of the foamed layer to an area B of a virtual perfect circle having the average outer diameter D of the expanded bead as a diameter is 0.55 or more and 0.90 or less.

9. The crystalline thermoplastic resin expanded bead according to any one of claims 4 to 8, wherein the ratio L/D of the average length L of the expanded bead in the axial direction to the average outer diameter D of the expanded bead is more than 0.7 and less than 1.3.

10. The crystalline thermoplastic resin expanded bead according to any one of claims 4 to 9, wherein the number of the grooves provided on the expanded bead is 2 or more and 6 or less.

11. A method for producing a molded article of crystalline thermoplastic resin expanded beads, the method comprising:

filling crystalline thermoplastic resin expanded beads in a mold; and
thereafter, performing in-mold molding by supplying steam into the mold to fusion-bond the expanded beads, thereby obtaining a molded article of crystalline thermoplastic resin expanded beads, the molded article having a molded article ratio of 15 times or more and 90 times or less and an open cell content of 2% or more and 12% or less, wherein
the expanded beads each include a foamed layer including a crystalline thermoplastic resin as a base resin,
the expanded beads each have a columnar shape without a through-hole and have at least one groove on a side peripheral surface thereof,
in a cut surface obtained by cutting each of the expanded beads at a center in an axial direction of the expanded bead along a plane perpendicular to the axial direction, a ratio Ca/A of an average cross-sectional area Ca per groove to an average cross-sectional area A of the expanded bead is 0.01 or more and 0.25 or less, a ratio Ct/A of a total cross-sectional area Ct of the groove(s) to the average cross-sectional area A of the expanded bead is 0.02 or more and 0.75 or less, and an average outer diameter D of the expanded bead is 0.5 mm or more and 10 mm or less, and
a ratio LID of an average length L of the expanded bead in the axial direction to the average outer diameter D of the expanded bead is 0.5 or more and 2.0 or less.

12. The method for producing a molded article of crystalline thermoplastic resin expanded beads according to claim 11, wherein the expanded beads are filled in the mold without applying an internal pressure to the expanded beads or after applying an internal pressure of 0.1 MPa(G) or less to the expanded beads.

FIG. 1

FIG. 2

FIG. 3

FIG. 4

FIG. 5

FIG. 6

FIG. 7

FIG. 8

FIG. 9

FIG. 10

FIG. 11

## INTERNATIONAL SEARCH REPORT

| International application No. |
| --- |
| **PCT/JP2023/003416** |

### A. CLASSIFICATION OF SUBJECT MATTER

*C08J 9/16*(2006.01)i; *B29C 44/00*(2006.01)i; *B29C 44/44*(2006.01)i
FI: C08J9/16 CES; B29C44/00 G; B29C44/44

According to International Patent Classification (IPC) or to both national classification and IPC

### B. FIELDS SEARCHED

Minimum documentation searched (classification system followed by classification symbols)

C08J9/00 - 9/42, B29C44/00 - 44/60, B29C67/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2018-131620 A (ASAHI KASEI CORP.) 23 August 2018 (2018-08-23)<br>entire text | 1-12 |
| A | JP 05-008315 A (KANEGAFUCHI CHEM. IND. CO., LTD.) 19 January 1993 (1993-01-19)<br>entire text | 1-12 |
| A | JP 2020-163724 A (JSP CORP.) 08 October 2020 (2020-10-08)<br>entire text | 1-12 |
| A | JP 2019-107856 A (ASAHI KASEI CORP.) 04 July 2019 (2019-07-04)<br>entire text | 1-12 |
| A | JP 2011-074152 A (SEKISUI PLASTICS CO., LTD.) 14 April 2011 (2011-04-14)<br>entire text | 1-12 |
| A | JP 11-334501 A (JSP CORP.) 07 December 1999 (1999-12-07)<br>entire text | 1-12 |
| A | JP 2018-171829 A (ASAHI KASEI CORP.) 08 November 2018 (2018-11-08)<br>entire text | 1-12 |

☑ Further documents are listed in the continuation of Box C.   ☑ See patent family annex.

| | |
| --- | --- |
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **18 April 2023** | **25 April 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2023/003416**

### C. DOCUMENTS CONSIDERED TO BE RELEVANT

| Category* | Citation of document, with indication, where appropriate, of the relevant passages | Relevant to claim No. |
|---|---|---|
| A | JP 2012-188643 A (SEKISUI PLASTICS CO., LTD.) 04 October 2012 (2012-10-04) entire text | 1-12 |
| A | JP 2018-075753 A (JSP CORP.) 17 May 2018 (2018-05-17) entire text | 1-12 |
| A | JP 2018-044127 A (ASAHI KASEI CORP.) 22 March 2018 (2018-03-22) entire text | 1-12 |
| A | WO 2021/170492 A1 (BOREALIS AG) 02 September 2021 (2021-09-02) whole document | 1-12 |

Form PCT/ISA/210 (second sheet) (January 2015)

INTERNATIONAL SEARCH REPORT
Information on patent family members

International application No.

**PCT/JP2023/003416**

| Patent document cited in search report | | | Publication date (day/month/year) | Patent family member(s) | | | Publication date (day/month/year) |
|---|---|---|---|---|---|---|---|
| JP | 2018-131620 | A | 23 August 2018 | US 2020/0032023 A1 whole document<br>WO 2018/147464 A1 whole document<br>EP 3581613 A1 whole document | | | |
| JP | 05-008315 | A | 19 January 1993 | US 5620636 A whole document<br>WO 1992/017330 A1 whole document<br>EP 538475 A1 whole document | | | |
| JP | 2020-163724 | A | 08 October 2020 | (Family: none) | | | |
| JP | 2019-107856 | A | 04 July 2019 | (Family: none) | | | |
| JP | 2011-074152 | A | 14 April 2011 | (Family: none) | | | |
| JP | 11-334501 | A | 07 December 1999 | (Family: none) | | | |
| JP | 2018-171829 | A | 08 November 2018 | US 2020/0032023 A1 whole document<br>WO 2018/147464 A1 whole document<br>EP 3581613 A1 whole document | | | |
| JP | 2012-188643 | A | 04 October 2012 | (Family: none) | | | |
| JP | 2018-075753 | A | 17 May 2018 | (Family: none) | | | |
| JP | 2018-044127 | A | 22 March 2018 | (Family: none) | | | |
| WO | 2021/170492 | A1 | 02 September 2021 | EP 3872121 A1 whole document | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003039565 A
- JP 2000129028 A
- JP 2003201361 A
- JP H0446217 A

### Non-patent literature cited in the description

- Polymer Analysis Handbook. Kinokuniya, January 1995, 615-616, 618-619